(19) Europäisches Patentamt
European Patent Office
Office européen des brevets

(11) EP 2 291 271 B1

(12) EUROPÄISCHE PATENTSCHRIFT

(45) Veröffentlichungstag und Bekanntmachung des Hinweises auf die Patenterteilung:
01.05.2013 Patentblatt 2013/18

(21) Anmeldenummer: 09765580.7

(22) Anmeldetag: 12.06.2009

(51) Int Cl.:
B29B 7/48 (2006.01)         B29C 47/40 (2006.01)
B29C 47/64 (2006.01)

(86) Internationale Anmeldenummer:
PCT/EP2009/004248

(87) Internationale Veröffentlichungsnummer:
WO 2009/153000 (23.12.2009 Gazette 2009/52)

(54) **VERFAHREN ZUR EXTRUSION PLASTISCHER MASSEN**

METHOD FOR THE EXTRUSION OF PLASTIC MATERIALS

PROCÉDÉ D'EXTRUSION DE MATIÈRES PLASTIQUES

(84) Benannte Vertragsstaaten:
AT BE BG CH CY CZ DE DK EE ES FI FR GB GR HR HU IE IS IT LI LT LU LV MC MK MT NL NO PL PT RO SE SI SK TR

(30) Priorität: 20.06.2008 DE 102008029303

(43) Veröffentlichungstag der Anmeldung:
09.03.2011 Patentblatt 2011/10

(73) Patentinhaber: Bayer MaterialScience AG
51368 Leverkusen (DE)

(72) Erfinder:
• BIERDEL, Michael
51373 Leverkusen (DE)
• KÖNIG, Thomas
51375 Leverkusen (DE)
• CONZEN, Carsten
51373 Leverkusen (DE)
• LIESENFELDER, Ulrich
51469 Bergisch Gladbach (DE)
• KOHLGRÜBER, Klemens
51515 Kürten (DE)
• RUDOLF, Reiner
51373 Leverkusen (DE)
• RECHNER, Johann
47906 Kempen (DE)

(74) Vertreter: BIP Patents
c/o Bayer Intellectual Property GmbH
Creative Campus Monheim
Alfred-Nobel-Straße 10
40789 Monheim (DE)

(56) Entgegenhaltungen:
EP-A1- 0 771 629     EP-A1- 0 778 078
EP-A1- 0 931 640     EP-A1- 1 832 407
EP-A2- 0 160 124

**Beschreibung**

Die Erfindung betrifft ein Verfahren zur Extrusion plastischer Massen, insbesondere von Polymerschmelzen und Mischungen von Polymerschmelzen, vor allem Thermoplasten und Elastomeren, besonders bevorzugt Polycarbonat und Polycarbonat-Blends, auch unter Einmischung anderer Stoffe wie z.B. Feststoffe, Flüssigkeiten, Gase oder andere Polymere oder andere Polymermischungen mit verbesserten optischen Eigenschaften, mit Hilfe eines Mehrwellenextruders mit besonderen Schneckengeometrien.

Extrusion ist ein bekanntes Verfahren bei der Herstellung, Aufbereitung und Verarbeitung von Polymeren. Unter Extrusion wird hier und im Folgenden die Behandlung eines Stoffes oder Stoffgemisches in einem gleichsinnig drehenden Doppelschnecken- oder Mehrwellenextruder, wie er umfassend in [1] beschrieben ist, verstanden ([1] = Kohlgrüber. Der gleichläufige Doppelschneckenextruder, Hanser Verlag München 2007).

Unter einem Mehrwellenextruder wird im Folgenden immer auch ein Ringextruder verstanden.

Die Behandlung plastischer Massen während einer Extrusion umfasst eine oder mehrere der Verfahrensoperationen Fördern, Aufschmelzen, Dispergieren, Mischen, Abpressen von flüssigen Bestandteilen, Entgasen und Druckaufbau.

Bei der Herstellung von Polymeren dient die Extrusion beispielsweise zur Entfernung von flüchtigen Bestandteilen wie Monomere und Rest-Lösemittel aus dem Polymer ([1], S. 192 bis 212), zur Reaktion bei Polyadditions- und Polykondensationsreaktionen sowie gegebenenfalls zum Aufschmelzen und Konfektionierung von Polymeren sowie ggf. der Mischung von Additiven mit dem Polymer.

Bei der Aufbereitung von Polymeren werden durch Extrusion vor allem Mischungen von Polymeren mit Additiven und Zuschlag- und Verstärkungsstoffen sowie Farben sowie Mischungen von verschiedenen Polymeren, die sich z.B. in chemischer Zusammensetzung, Molekulargewicht oder Molekülstruktur unterscheiden, hergestellt (siehe z.B. [1], S. 59 bis 93). Dieses auch als Compoundierung bezeichnete Verfahren dient der Polymeraufbereitung zur Herstellung der fertigen Kunststoff-Formmasse (das Compound) unter Einsatz der Kunststoffrohstoffe, die üblicherweise aufgeschmolzen werden, unter Zugabe und Mischen von Füll- und/oder Verstärkungsstoffen, Weichmachern, Haftvermittlern, Gleitmitteln, Stabilisatoren etc mit dem Polymer. Die Aufbereitung umfasst häufig auch die Entfernung von flüchtigen Bestandteilen wie z.B. Luft und Wasser. Die Aufbereitung kann auch eine chemische Reaktion wie z.B. Pfropfung, Modifikation von funktionellen Gruppen oder Modifikationen des Molekulargewichtes durch gezielten Auf- oder Abbau des Molekulargewichts beinhalten.

Wie allgemein bekannt und z.B. in [1] auf den Seiten 169 bis 190 beschrieben, lässt sich Mischen in distributives und dispersives Mischen einteilen. Unter distributivem Mischen wird das gleichmäßige Verteilen von verschiedenen Komponenten in einem betrachteten Volumen verstanden. Distributives Mischen liegt zum Beispiel bei der Vermischung gleichartiger Polymere vor. Beim dispersiven Mischen werden Feststoffteilchen, Flüssigkeitstropfen oder Gasblasen zunächst zerteilt. Für das Zerteilen müssen ausreichend große Scherkräfte aufgebracht werden, um zum Beispiel die Oberflächenspannung an der Grenzfläche zwischen Polymerschmelze und einem Additiv zu überwinden. Unter Mischen wird im Folgenden immer distributives und / oder dispersives Mischen verstanden.

In der Veröffentlichung [1] auf Seite 73ff wird die Schmelzeförderung und der Druckaufbau beschrieben. Die Schmelzeförderzonen dienen dazu, das Produkt von einer Verfahrenszone zur nächsten zu transportieren sowie Füllstoffe einzuziehen. Schmelzeförderzonen sind in der Regel teilgefüllt, wie z.B. beim Transport des Produktes von einer zur nächsten Verfahrenszone, beim Entgasen und in Verweilzeitzonen.

Bei der Verarbeitung von Polymeren werden die Polymere bevorzugt in die Form eines Halbzeuges, eines gebrauchsfertigen Produktes oder eines Bauteiles gebracht. Die Verarbeitung kann z.B. durch Spritzgießen, Extrusion, Folienblasen, Folienziehen oder Verspinnen erzeugen. Die Verarbeitung kann auch Mischungen von Polymeren mit Füll- und Zuschlagstoffen und Additiven sowie chemische Modifikationen wie z.B. Vulkanisation umfassen.

Extrusion von Polymeren werden, wie dem Fachmann bekannt ist, vorteilhaft auf Schneckenmaschinen mit zwei oder ggf. mehr Wellen durchgeführt.

Gleichsinnig drehende Zwei- oder ggf. Mehrwellenmaschinen, deren Rotoren sich gegenseitig exakt abschaben, sind bereits seit langem bekannt (DE 862 668). In der Herstellung, Aufarbeitung und Verarbeitung von Polymeren haben Schneckenmaschinen, die auf dem Prinzip exakt abschabender Profile beruhen, eine vielfältige Nutzung erfahren. Derartige Schneckenmaschinen haben bekanntlich eine gute Mischwirkung, eine gute Entgasungswirkung und eine gute Wirkung zum Aufschmelzen von Polymeren. Vorteile in der Qualität der damit hergestellten Produkte bieten sie, weil Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile wurden beispielsweise in Klemens Kohlgrüber. Der gleichläufige Doppelschneckenextruder, Hanser Verlag München 2007, S.96 ff [1] dargestellt. Dort wird die Konstruktion von ein-, zwei- und dreigängigen Profilen beschrieben. Weiterhin wird auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt.

Dem Fachmann ist bekannt, dass im Bereich der Schneckenkämme besonders viel Energie in der Schmelze dissipiert wird, was lokal zu starken Überhitzungen im Produkt führt. Dies ist beispielsweise in [1] auf den Seiten 160ff dargestellt. Diese lokalen Überhitzungen können zu Schädigungen im Produkt wie z.B. Veränderung in Geruch, Farbe, chemischer Zusammensetzung oder Molekulargewicht oder zur Bildung von Inhomogenitäten im Produkt wie Gelkörpern oder Stippen führen. Vor allem ein großer Kammwinkel ist hierbei schädlich.

Es ist dem Fachmann bekannt, dass die Reaktionsgeschwindigkeit, mit der eine Polymerschädigung von statten geht, von der Temperatur abhängt. Wie der Fachmann weiß und wie es z.B. in J. Robertson: Thermal Degradation Studies of Polycarbonate, Virginia Polytechnic Institute and State University, Blacksburg, 2001 im Kapitel 3 oder in K. Chrissafis: Kinetics of Thermal Degradation of Polymers, Journal of Thermal Analysis and Calorimetry, Vol. 95 (2009) 1, 273-283 nachzulesen ist, kann die Reaktionsgeschwindigkeitskonstante $k(T)$ mit dem Arrhenius-Ansatz beschrieben werden: $k(T) = A*\exp(-E_A/(R*T))$. In dieser Gleichung bedeuten k die Reaktionsgeschwindigkeitskonstante, T die absolute Temperatur in [K], A der Frequenzfaktor, $E_A$ die Aktivierungsenergie in [J/mol] und R die universelle Gaskonstante in [J/mol/K]. Es ist ferner bekannt, dass bereits eine Temperaturerhöhung von 10K zu einer Verdopplung der Reaktionsgeschwindigkeitskonstanten führen kann. Verfahren zur Extrusion plastischer Massen sollten daher so konzipiert sein, dass durch die Ver- und Bearbeitung der plastischen Masse der mittlere Temperaturanstieg möglichst gering ausfällt. Insbesondere sollten die Verfahren zur Extrusion plastischer Massen so konzipiert sein, dass bei der Ver- und Bearbeitung der plastischen Masse lokale Temperaturspitzen, wie sie zum Beispiel in den Kammbereichen eines Schneckenelements mit einem Erdmenger-Schneckenprofil gemäß dem Stand der Technik auftreten, vermieden werden.

Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen. In der Regel werden heute Schneckenelemente mit zwei- und dreigängigen Profilen verwendet, da eingängige Schneckenprofile aufgrund ihres großen Kammwinkels einen viel zu hohen Energieeintrag haben.

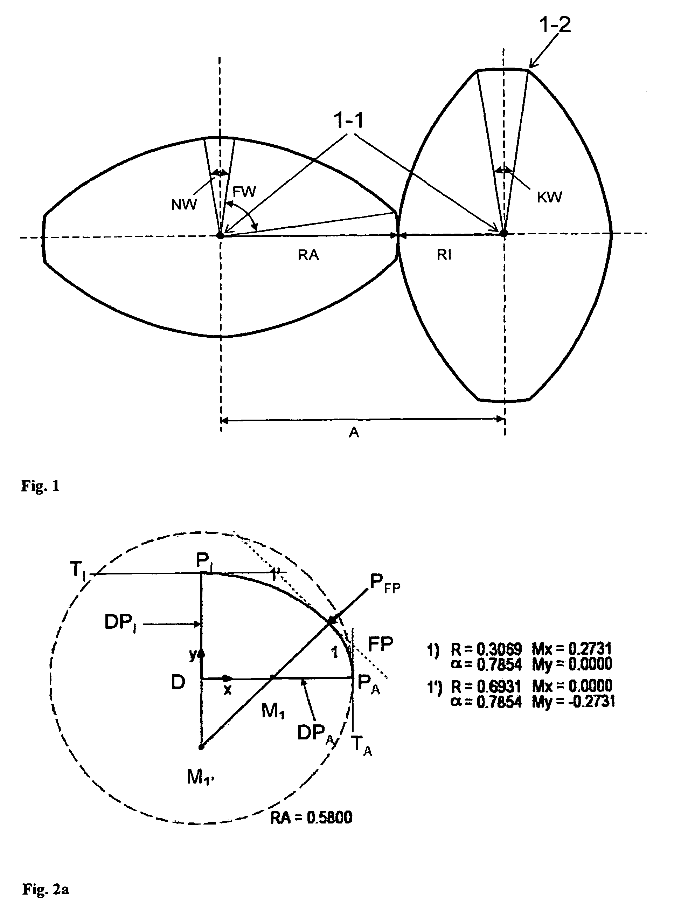

Nach dem Stand der Technik bekannte Schneckenelemente mit Ausnahme exzentrisch angeordneter Kreisscheiben sind dadurch gekennzeichnet, dass die Profilkurve im Querschnitt mindestens einen Knick aufweist (siehe z.B. Fig. 1), der am Übergang zwischen dem Schneckenkamm und den Gewindeflanken auftritt. Der Kamm besteht aus einem Kreisbogen mit Radius = Außendurchmesser des Profils und dem Drehpunkt des Profils als Mittelpunkt. Der Knick am Übergang zur Flanke des Profils bildet auf dem Schneckenelement eine Kante.

Eine der wesentlichen Aufgaben, die auf Mehrwellenmaschinen durchgeführt werden, ist das Dispergieren von flüssigen Phasen oder Schmelzen, die nicht homogen ineinander mischbar sind oder das Dispergieren von Feststoffen in Polymerschmelzen. Aus der technischen Literatur ist bekannt (siehe z.B. Chang Dae Han: Multiphase Flow in Polymer Processing, Academic Press, New York 1981), dass eine Kombination aus Scherströmung und Dehnströmung für schwierige Dispergieraufgaben optimal ist.

Eine solche Strömungsform liegt in einem Schneckenkanal vor, wo die Masse einerseits durch die Rotation der Wellen geschert und andererseits durch die Konvergenz des Schneckenkanals zum Kamm hin gleichzeitig gedehnt wird. Im Bereich des Schneckenkammes liegt allerdings eine reine Scherströmung vor, die bei schwierigen Dispergieraufgaben kaum zur Dispergierung beitragen wird. Andererseits wird im Spalt zwischen dem Schneckenkamm und dem Gehäuse beziehungsweise der Nachbarwelle der größte Teil der eingetragenen Energie dissipiert. Deshalb trägt dieser Bereich maßgeblich zur Erhitzung der Polymermasse und damit potentiell zur thermischen Schädigung bei, ohne einen Beitrag zur Verfahrensaufgabe der Dispergierung zu leisten.

Eine Ausnahmestellung haben exzentrisch angeordnete Kreisscheiben, die bekanntermaßen exakt abschabend angeordnet werden können. Sie weisen keinen Kammbereich mit reiner Scherströmung auf. Sie sind für ihre exzellente Dispergierwirkung bekannt, weisen aber ebenfalls eine hohe Energieeinleitung auf, weil sie über einen großen Umfangsbereich einen sehr engen Spalt erzeugen. Ferner sind sie auf eine Gangzahl Z=1 beschränkt.

EP-A-O 160 124 offenbart ein Verfahren gemäß den Oberbegriff des Anspruchs 1.

Es bestand daher die Aufgabe, ein Verfahren zur Extrusion von plastischen Massen zu finden, bei dem die mittlere und die maximale Temperaturerhöhung verringert werden, um eine Polymerschädigung zu vermeiden.

Die Aufgabe wird überraschenderweise dadurch gelöst, dass ein dicht kämmender, gleichlaufender Compoundier- oder Entgasungsextruder verwendet wird, wobei Schneckenelemente verwendet werden, die besondere Geometrien aufweisen. Hierbei handelt es sich um Schneckenelemente, deren Profil über den gesamten Querschnitt durch eine stetig differenzierbare Profilkurve darstellbar ist. Durch die Verwendung dieser Schneckenelemente für mehrwellige Schneckenmaschinen wird eine möglichst geringe Energieeinleitung gegenüber dem Stand der Technik erzielt, was zur Folge eine geringere Temperaturerhöhung, und somit eine geringere mittlere und maximale Temperatur, hat. Gleichzeitig wird ein sehr guter Druckaufbau, vergleichbar oder gar höher im Vergleich zum Stand der Technik erzielt.

Überraschender Weise zeigt sich, dass das Druckaufbauvermögen des erfindungsgemäß verwendeten Förderelements größer ist als bei einem Förderelement mit Erdmenger-Schneckenprofil nach dem Stand der Technik. Mit einem erfindungsgemäß verwendeten Förderelement lässt sich daher ein gewünschter oder erforderlicher Druckaufbau beispielsweise in einer kürzeren Druckaufbauzone bewerkstelligen, wodurch sich der Extruderaufbau entweder verkürzt oder sich bei konstanter Extruderlänge andere Verfahrenszonen wie beispielsweise eine Entgasungszone oder eine Mischzone verlängern und sich somit deren Wirkung auf die plastische Masse verbessert.

Gegenstand der Erfindung ist daher ein Verfahren zur Aufarbeitung von plastischen Massen, mit den Merkmalen des Anspruchs 1.

Dabei ist die Erfindung nicht auf Schneckenelemente aus der heutzutage üblichen Modulbauweise einer Schnecke aus Schneckenelementen und Kernwellen beschränkt, sondern auch auf Schnecken in Massivbauweise anwendbar. Daher sind unter dem Begriff Schneckenelemente auch Schnecken in Massivbauweise zu verstehen.

Die Querschnittprofile - im Folgenden auch kurz Profile oder auch Schneckenprofile genannt - erfindungsgemäß verwendeter Schneckenelemente lassen sich durch eine Anordnung von Kreisbögen eindeutig beschreiben.

Das Schneckenprofil erzeugender und erzeugter erfindungsgemäß verwendeter Schneckenelemente setzt sich in seiner Gesamtheit aus n Kreisbögen zusammen, wobei n größer oder gleich vier ist. Jeder der n Kreisbögen besitzt einen Anfangs- und einen Endpunkt. Die n Kreisbögen gehen an ihren Anfangs- und Endpunkten tangential ineinander über, so dass sie erfindungsgemäß eine stetig differenzierbare Profilkurve bilden.

Die Position eines jeden Kreisbogens j (j=1 bis n) ist durch die Angabe von zwei verschiedenen Punkten eindeutig festlegbar. Zweckmäßigerweise wird die Position eines Kreisbogens durch Angabe des Mittelpunktes und des Anfangs- oder Endpunktes festgelegt. Die Größe eines einzelnen Kreisbogens j ist durch den Radius $r_j$ und den Winkel $\alpha_j$ um den Mittelpunkt zwischen Anfangs- und Endpunkt festgelegt, wobei der Radius $r_j$ größer als 0 und kleiner als der Achsabstand a zwischen den Wellen ist und der Winkel $\alpha_j$ im Bogenmaß größer oder gleich 0 und kleiner oder gleich $2\pi$ ist, wobei $\pi$ die Kreiszahl ist.

Erfindungsgemäß verwendete Schneckenelemente sind dadurch gekennzeichnet, dass

- das erzeugende Schneckenprofil und das erzeugte Schneckenprofil in einer Ebene liegen,

- die Drehachse des erzeugenden Schneckenprofils und die Drehachse des erzeugten Schneckenprofils in einem Abstand a (Achsabstand) jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,

- die Anzahl der Kreisbögen des gesamten erzeugenden Schneckenprofils n größer oder gleich vier (n≥4) ist,

- der Außenradius ra des erzeugenden Schneckenprofils größer als Null (ra>0) und kleiner als der Achsabstand (ra<a) ist,

- der Kernradius ri des erzeugenden Schneckenprofils größer als Null (ri>0) und kleiner oder gleich ra (ri≤ra) ist,

- alle Kreisbögen des erzeugenden Schneckenprofils tangential ineinander übergehen,

- die Kreisbögen ein geschlossenes Schneckenprofil bilden, d.h. die Summe der Winkel $\alpha_j$ aller Kreisbögen j gleich $2\pi$ ist, wobei $\pi$ die Kreiszahl ($\pi\approx3{,}14159$) ist,

- die Kreisbögen ein konvexes Schneckenprofil bilden,

- jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,

- mindestens einer der Kreisbögen des erzeugenden Schneckenprofils den Außenradius ra des erzeugenden Schneckenprofils in einem Punkt $P_A$ berührt,

- mindestens einer der Kreisbögen des erzeugenden Schneckenprofils den Kernradius ri des erzeugenden Schneckenprofils in einem Punkt $P_1$ berührt,

- die Anzahl der Kreisbögen n' des erzeugten Schneckenprofils gleich der Anzahl der Kreisbögen n des erzeugenden Schneckenprofils ist,

- der Außenradius ra' des erzeugten Schneckenprofils gleich der Differenz aus Achsabstand und Kernradius ri des erzeugenden Schneckenprofils ist (ra' = a-ri),

- der Kernradius ri' des erzeugten Schneckenprofils gleich der Differenz aus Achsabstand und Außenradius ra des erzeugenden Schneckenprofils ist (ri' = a-ra),

- der Winkel $\alpha_j'$ des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,

- die Summe von Radius $r_j'$ des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,

- der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schneckenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,

- ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

Die Profile erfindungsgemäß verwendeter Schneckenelemente sind dadurch charakterisiert, dass sie allein mit Winkellineal und Zirkel konstruiert werden können. So wird der tangentiale Übergang zwischen dem j-ten und dem (j+1)-ten Kreisbogen des erzeugenden Schneckenprofils konstruiert, indem um den Endpunkt des j-ten Kreisbogens ein Kreis mit dem Radius $r_{j+1}$ geschlagen wird und der näher zum Drehpunkt des erzeugenden Schneckenprofils gelegene Schnittpunkt dieses Kreises mit der Geraden, die durch den Mittelpunkt und den Endpunkt des j-ten Kreisbogens definiert ist, der Mittelpunkt des (j+1)-ten Kreisbogens ist. Praktischerweise wird man anstelle von Winkellineal und Zirkel ein Computerprogramm zur Konstruktion der Schneckenprofile verwenden.

Ein vorgegebenes Schneckenprofil auf einer ersten Welle eines Doppelschneckenextruders (das "erzeugende") legt das Schneckenprofil auf einer benachbarten zweiten Welle (das "erzeugte") eindeutig fest. Das Schneckenprofil auf einer ersten Welle des Doppelschneckenextruders wird daher als das erzeugende Schneckenprofil bezeichnet, während das Schneckenprofil auf der benachbarten zweiten Welle des Doppelschneckenextruders als das erzeugte Schneckenprofil bezeichnet wird. Bei einem Mehrwellenextruder werden das erzeugende Schneckenprofil und das erzeugte Schneckenprofil auf benachbarten Wellen immer abwechselnd eingesetzt.

Die im erfindungsgemäßen Verfahren verwendeten Schneckenelemente können unsymmetrisch oder symmetrisch sein; bevorzugt sind erfindungsgemäß verwendete Schneckenelemente symmetrisch. Symmetrische Schneckenelemente können achsensymmetrisch oder punktsymmetrisch sein; bevorzugt sind erfindungsgemäß verwendete Schneckenelemente achsensymmetrisch.

Ein achsensymmetrisches Schneckenprofil mit Gangzahl Z kann in 2Z symmetrische Teile aufgeteilt werden, wobei die symmetrischen Teile durch Spiegelung an den Symmetrieachsen ineinander überführt werden können. Aufgrund seiner Symmetrie ist das Profil eines achsensymmetrischen Schneckenelements mit einer Gangzahl Z also durch einen Profil-Abschnitt in einem Ausschnitt von 360°/(2·Z), der zwischen zwei Symmetrieachsen des Profils liegt, vollständig definiert. Das restliche Profil ergibt sich durch Spiegelung des Profil-Abschnitts an den Z Symmetrieachsen, die sich im Drehpunkt schneiden und den Winkel von 360° um den Drehpunkt in 2·Z Winkel der Größe 360°/(2·Z) unterteilen. Bei achsensymmetrischen Schneckenelementen sind ferner die korrespondierenden Schneckenprofile auf benachbarten Wellen (erzeugendes und erzeugtes Profil) gleich bzw. lassen sich durch Rotation zur Deckung bringen [1].

Analoges gilt für punktsymmetrische Schneckenprofile, bei dem sich die symmetrischen Teile jeweils durch Punktspiegelung am Symmetriezentrum ineinander überführen lassen.

Im Folgenden wird eine besondere Ausführungsform erfindungsgemäß verwendeter Schneckenelemente beschrieben, die dadurch charakterisiert ist, dass die Schneckenelemente achsensymmetrisch sind. Die Gangzahl Z solcher erfindungsgemäß verwendeter achsensymmetrischer Schneekenelemente beträgt bevorzugt 2 bis 8; besonders bevorzugt beträgt sie 2 bis 4.

Die Profilkurve des Querschnitts erfindungsgemäß verwendeter achsensymmetrischer Schneckenelemente lässt sich in 2·Z Profil-Abschnitte unterteilen, die durch Achsenspiegelung an den Symmetrieachsen des Profils ineinander überführt werden können. Die Zahl der Kreisbögen n, die einen der Profil-Abschnitte bilden, beträgt bevorzugt 2 bis 8, besonders bevorzugt 2 bis 4.

Das Profil achsensymmetrischer erfindungsgemäß verwendeter Schneckenelemente mit der Gangzahl Z zeichnet sich dadurch aus, dass es innerhalb eines Profil-Abschnitts in einem Ausschnitt von 360°/(2·Z) nur einen einzigen Punkt $P_A$ gibt, der einen Abstand vom Drehpunkt hat, der dem Außenradius ra des Schneckenelements entspricht. Anders ausgedrückt gibt es nur einen Punkt $P_A$ innerhalb des Profil-Abschnitts, der auf einem Kreis um den Drehpunkt mit dem Außenradis ra (Außenkreis) liegt.

Während bei Schneckenprofilen nach dem Stand der Technik alle Punkte im Bereich des Kammwinkels KW das Gehäuse mit engem Spalt abreinigen (siehe z.B. Fig. 1), ist es beim Profil achsensymmetrischer erfindungsgemäß verwendeter Schneckenelemente nur der ausgezeichnete Punkt $P_A$ auf dem Außenradius (siehe z.B. Fig. 2a).

Aus praktischen Gründen soll der weiteren Beschreibung ein kartesisches Koordinatensystem zu Grunde gelegt werden, dessen Ursprung durch den Drehpunkt D eines Schneckenelements gebildet wird. Die x-Achse des kartesischen Koordinatensystems verläuft durch den Punkt $P_A$; die y-Achse steht im Drehpunkt D senkrecht auf der x-Achse. In Fig. 2a ist ein solches Koordinatensystem gezeigt.

Weiterhin ist es sinnvoll, dimensionslose Kennzahlen zu verwenden, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für die Figuren gelten folgende Konventionen: Die Koordinaten x und y haben ihren Ursprung im Drehpunkt einer der Wellen. Alle Winkelangaben erfolgen im Bogenmaß. Alle übrigen Maßangaben sind auf den Achsabstand normiert und werden durch Großbuchstaben dargestellt: A = a/a; $R_j$ = $r_j$/a; RA = ra/a; RI = ri/a usw.

Der Profil-Abschnitt eines erfindungsgemäß verwendeten achsensymmetrischen Schneckenelements ist dadurch gekennzeichnet, dass er sich zwischen dem Punkt $P_A$, der auf dem Außenradius des Profils liegt, und einem Punkt $P_I$, der auf dem Kernradius des Profils liegt, aus tangential ineinander übergehenden Kreisbögen zusammensetzt, wobei die Geraden $DP_A$ und $DP_I$, die durch die Punkte $P_A$ und $P_I$ laufen und sich im Drehpunkt D schneiden, einen Winkel von 360°/(2·Z) einschließen.

In einer besonderen Ausführungsform setzt sich der Profil-Abschnitt eines erfindungsgemäß verwendeten Schneckenelements zwischen den Punkten $P_A$ und $P_I$ aus genau zwei Kreisbögen zusammen. Die Kreisbögen gehen in einem Punkt $P_{FP}$ ineinander über und bilden erfindungsgemäß über den gesamten Profil-Abschnitt eine stetig differenzierbare Kurve. Im Punkt $P_{FP}$ tangieren die Kreisbögen eine Gerade FP. Die Gerade FP verläuft in einem Abstand vom Drehpunkt, der dem halben Achsabstand A entspricht, und sie besitzt eine Steigung (im Bogenmaß) von -1/tan(π/(2·Z)). Der Punkt $P_{FP}$ hat einen Abstand vom Schnittpunkt einer Tangente an den Außenkreis im Punkt $P_A$ mit der Geraden FP, der dem Abstand zwischen dem Schnittpunkt und $P_A$ entspricht. Eine Orthogonale, die vom Punkt $P_{FP}$ zur Geraden FP gebildet wird, schneidet die Gerade $DP_A$, die durch den Punkt $P_A$ und den Drehpunkt geht, im Mittelpunkt $M_1$ eines ersten profilerzeugenden Kreisbogens 1, während sie die Gerade $DP_1$, die durch den Punkt $P_1$ und den Drehpunkt geht, im Mittelpunkt $M_{1'}$ des anderen profilerzeugenden Kreisbogens 1' schneidet (siehe zur Verdeutlichung Fig. 2a).

Der Radius $R_1^{2K}$ des profilerzeugenden Kreisbogens 1 entspricht somit der Strecke $M_1 P_A$; der Radius $R_{1'}^{2K}$ des Kreisbogens 1' entspricht der Strecke $M_{1'}P_I$.

In einer weiteren besonderen Ausführungsform setzt sich der Profil-Abschnitt eines erfindungsgemäß verwendeten Schneckenelements zwischen den Punkten $P_A$ und $P_I$ aus genau drei Kreisbögen zusammen. Man erhält damit einen zusätzlichen Freiheitsgrad und kann das Profil im Bereich des Punktes $P_A$, der die Zylinderwand abreinigt, durch Wahl eines kleinen Radius schlanker gestalten, wodurch die Energiedissipation weiter reduziert wird.

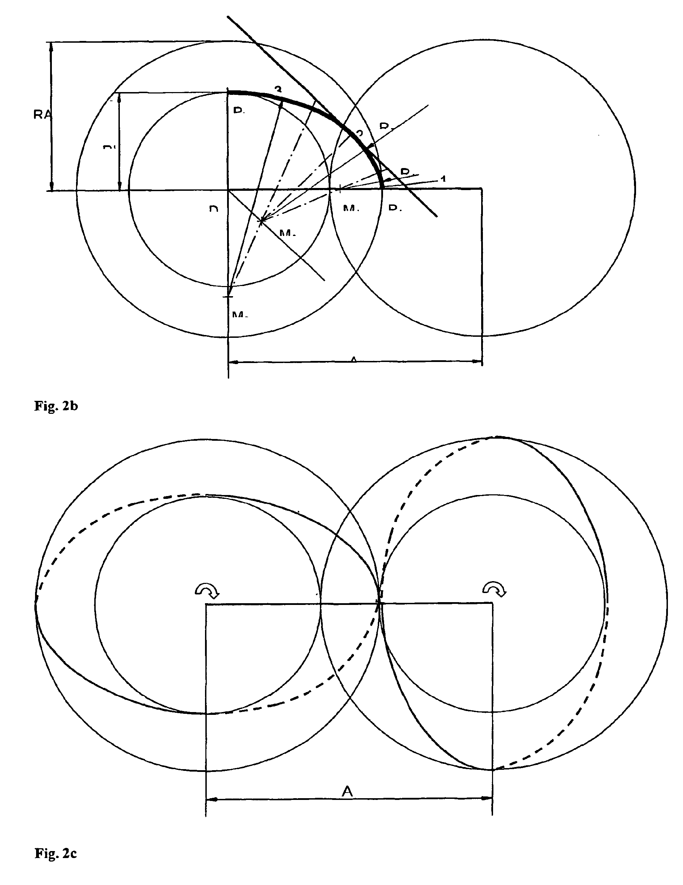

Fig. 2b zeigt beispielhaft einen Profil-Abschnitt eines erfindungsgemäß verwendeten zweigängigen Schneckenelements aus drei Kreisbögen. Der Radius $R_1$ des Kreisbogens 1, der im Punkt $P_A$ anschließt, ist in den Grenzen $0 < R_1 < R_{1'}^{2K}$ frei wählbar. Sein Mittelpunkt $M_1$ liegt auf der Verbindungsstrecke $D-P_A$.

Der Radius des Kreisbogens 3, der im Punkt $P_1$ anschließt, hat einen Radius von $R_3$ = A -$R_1$. Sein Mittelpunkt $M_3$ liegt auf der Strecke $D-P_I$.

Zwischen diesen beiden Kreisbögen schließt sich stetig differenzierbar ein Kreisbogen 2 mit dem Radius $R_2$ = A/2 an. Sein Mittelpunkt $M_2$ befindet sich im Abstand A/2-$R_1$ vom Punkt $P_1$ und im Abstand $R_3$-A/2 vom Punkt $M_3$.

Der Kreisbogen 1 wird begrenzt durch $P_A$ einerseits und durch den Schnittpunkt mit der Geraden durch $P_1$ und $P_2$ andererseits.

Der Kreisbogen 3 wird begrenzt durch $P_1$ einerseits und durch den Schnittpunkt mit der Geraden durch $M_2$ und $M_3$ andererseits.

Durch die Wahlfreiheit eines der Radien $R_1$ oder $R_3$ ist es möglich, für den gegebenen Achsabstand A verschiedene erfindungsgemäß verwendete, exakt abschabende Schneckenprofile zu konstruieren. Somit ist es auch möglich, erfindungsgemäß verwendete asymmetrische Schneckenprofile zu konstruieren, indem an jeweils korrespondierenden Ausschnitten der Größe 360°/(2·Z) des Schneckenprofils auf beiden Wellen dasselbe Schneckenprofil vorgesehen wird, Ausschnitte der Größe 360°/(2·Z) auf einer Welle jedoch unterschiedlich gestaltet werden. Solche Konstruktionen sind dann sinnvoll, wenn dem Fördergut im Rahmen von Dispergieraufgaben spezielle Deformationen aufgeprägt werden sollen, beispielsweise eine langsame Kompression gefolgt von einer schnellen Expansion.

Schneckenelemente, die sich innerhalb eines Profilabschnitts der Größe 360°/(2·Z) aus mehr als drei Kreisbögen zusammensetzen, gehören ebenfalls zum Gegenstand der vorliegenden Erfindung. Erfindungsgemäß gehen die Kreisbögen an ihren Anfangs- und Endpunkten tangential ineinander über.

Das Verhältnis RA = ra/a vom Außenradius ra des Schneckenelements zum Achsabstand a beträgt für zweigängige erfindungsgemäß verwendete Schnecken bevorzugt zwischen 0,54 und 0,7 und besonders bevorzugt zwischen 0,58 und 0,63, für dreigängige Schnecken bevorzugt zwischen 0,53 und 0,57 und besonders bevorzugt zwischen 0,54 und 0,56, sowie für viergängige Schnecken bevorzugt zwischen 0,515 und 0,535.

Die erfindungsgemäß verwendeten Schneckenelemente können als Förderelemente oder Knetelemente oder Mischelemente ausgebildet sein.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung t des Förderelements kann z.B. Werte von dem 0,1-fachen bis 10-fachen des Außendurchmessers annehmen, wobei unter der Steigung die axiale Länge verstanden wird, die für eine vollständige Drehung des Schneckenprofils erforderlich ist. Bevorzugt liegt die Steigung t im Bereich des 0,3-fachen bis 3-fachen des Außendurchmessers. Die axiale Länge eines Förderelements wird aus praktischen Gründen bevorzugt in ganzzahligen Vielfachen von t/Z ausgeführt.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,02-fachen bis 2-fachen des Außendurchmessers. Der axiale Abstand zwischen zwei benachbarten Knetscheiben liegt bevorzugt im Bereich des 0,001-fachen bis 0,1-fachen des Außendurchmessers.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung t liegt bevorzugt im Bereich des 0,1-fachen bis 10-fachen des Außendurchmessers. Die axiale Länge eines Mischelements wird analog zu den Förderelementen bevorzugt in ganzzahligen Vielfachen von t/Z ausgeführt. Die Durchbrüche haben bevorzugt die Form einer u- oder v-formigen Nut. Wird das Mischelement ausgehend von einem förderaktiven Element gebildet, so werden die Nuten bevorzugt gegenfördernd oder achsparallel angeordnet.

Bevorzugte Materialien aus denen die Schneckenelemente bestehen sind Stähle, insbesondere Nitrierstähle, Chrom-, Werkzeug- und Edelstähle, sowie pulvermetallurgisch hergestellte metallische Verbundwerkstoffe auf Basis von Eisen, Nickel oder Kobalt.

Die erfindungsgemäß verwendeten Schneckenelemente bilden in mehrwelligen Schneckenmaschinen mit paarweise gleichsinnig und paarweise exakt abschabenden Schneckenwellen einen über ihren gesamten Umfang laufenden Kanal. Dabei weist der Kanal eine abwechselnd zu- und abnehmende Kanalbreite auf. Ein solcher Kanal wird hier als konvergent-divergenter Kanal bezeichnet. In einem solchen konvergent-divergenten Kanal tritt im Betrieb über seine gesamte Länge eine Kombination aus Scherströmung und Dehnströmung auf, die eine sehr gute Dispergierwirkung hat. Die Energieeinleitung ist im Vergleich zu herkömmlichen, nach dem Stand der Technik bekannten Schneckenelementen mit einem Knick im Profil reduziert.

Exzentrisch angeordnete Kreisscheiben bilden ebenfalls einen konvergent-divergenten Kanal. Die erfindungsgemäß verwendeten Schneckenelemente weisen jedoch einen geringeren Umfangsbereich auf, in dem ein sehr enger Spalt vorliegt, als exzentrisch angeordnete Kreisscheiben. Daher ist die Energieeinleitung in diesem Verfahren mit den erfindungsgemäß verwendeten Schneckenelementen in Mehrwellenschneckenmaschinen gegenüber der Verwendung exzentrisch angeordneter Kreisscheiben reduziert.

Dem Fachmann ist bekannt, dass direkt abschabende Schneckenprofile nicht direkt in einen Doppelschneckenextruder eingesetzt werden können, vielmehr sind Spiele zwischen den Schneckenelementen und dem Gehäuse und zwischen den Schneckenelementen selbst erforderlich. Zu große Spiele verringern den Effekt der Selbstreinigung und beeinflussen Förderwirkung und Druckaufbau negativ. Zu kleine Spiele erhöhen den Energieeintrag und führen zu einer unerwünschten Temperaturerhöhung der plastischen Massen. Für die Schneckenprofile erfindungsgemäß verwendeter Schneckenelemente werden Spiele im Bereich von 0,001 bis 0,1 bezogen auf den Durchmesser des Schnek-

kenprofils, verwendet, bevorzugt 0,002 bis 0,05 und besonders bevorzugt 0,004 bis 0,02. Die Spiele können, wie dem Fachmann bekannt ist, zwischen Schnecke und Gehäuse und zwischen Schnecke und Schnecke unterschiedlich groß oder gleich sein. Die Spiele können auch konstant oder, in den angegebenen Grenzen, variabel sein. Es ist auch möglich, innerhalb der Spiele ein Schneckenprofil zu verschieben. Dem Fachmann sind Methoden bekannt, um ausgehend von einem vorgegebenen, exakt abschabenden Schneckenprofil, eine Schneckenprofil mit Spielen abzuleiten. Bekannte Methoden hierfür sind beispielsweise die in [1] auf den Seiten 28 ff beschriebene Möglichkeit der Achsabstand-Vergrößerung, der Längsschnitt-Äquidistanten und der Raumäquidistanten, die alle dem Fachmann bekannt sind. Bei der Achsabstand-Vergrößerung wird ein Schneckenprofil mit kleinerem Durchmesser konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elements) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt werden die Längsschnitt-Äquidistante und die Raumäquidistante, besonders bevorzugt die Raumäquidistante verwendet.

Die Erfindung wird nachstehend anhand der Figuren beispielhaft näher erläutert ohne sie jedoch auf diese zu beschränken.

Sinnvollerweise arbeitet man mit dimensionslosen Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann.

Für die Figuren gelten folgende Konventionen: Die Koordinaten x und y haben ihren Ursprung im Drehpunkt einer der Wellen. Alle Winkelangaben erfolgen im Bogenmaß. Alle übrigen Maßangaben sind auf den Achsabstand normiert und werden durch Großbuchstaben dargestellt: $A = a/a$; $R_j = r_j/a$; $RA = ra/a$; $RI = ri/a$ $T = t/a$ usw. Mx und My sind die x- und y-Koordinaten des Kreismittelpunkts eines profilerzeugenden Kreisbogens, R ist der auf den Achsabstand a normierte Radius und a der Bogenwinkel des Kreisbogens. Weiterhin bedeuten RG = normierter Gehäuseradius, RV = normierter virtueller Gehäuseradius, RA = normierter Außenradius des exakt abschabenden Profils, RF = normierter Außenradius der zu fertigenden Schnecke, S = normiertes Spiel der Schnecken untereinander (Spalt), D = normiertes Spiel der Schnecke zum Gehäuse, VPR = normierter Betrag der Profilverschiebung, VPW Winkel der Profilverschiebung im Bogenmaß, VLR = normierter Betrag der Verschiebung der linken Welle, VLW = Winkel der Verschiebung der linken Welle, VRR = normierter Betrag der Verschiebung der rechten Welle, VRW = Winkel der Verschiebung der rechten Welle.

Fig. 1 zeigt im Querschnitt zwei in einem Abstand A voneinander angeordnete exakt abschabende, zweigängige Schneckenelemente nach dem Stand der Technik. Die Schneckenelemente verfügen über dasselbe achsensymmetrische Profil. Das rechte Schneckenelement ist gegenüber dem linken um 90° gedreht. Die mit 1-1 gekennzeichneten Punkte geben die Drehpunkte der Wellen an, auf denen die Schneckenelemente angeordnet sind. Das gezeigte Profil setzt sich aus mehreren symmetrischen Abschnitten zusammen. An den Übergängen der Abschnitte treten Knicke auf (einer der Knicke ist durch einen Pfeil mit 1-2 gekennzeichnet). Im Bereich des Kammwinkels KW unterliegt das Produkt beim Betrieb einer Mehrwellenschneckenmaschine mit derartigen Schneckenelementen einer hohen Scherung ohne Dehnung.

Dieser Nachteil wird durch ein erfindungsgemäß verwendetes Schneckenelement mit einem Profil gemäß Fig. 2 vermieden. Fig. 2a zeigt im Querschnitt ein Viertel des Profils eines zweigängigen exakt abschabenden Schneckenelements (erzeugendes Schneckenelement). Das Profil ist achsensymmetrisch zur x- und y-Achse, sodass sich das gesamte Profil durch Spiegelung des gezeigten Viertels an der x- und y-Achse ergeben würde. Das Profil des korrespondierenden (erzeugten) Schneckenelements ergibt sich dann durch Drehung des Profils des erzeugenden Schneckenelements um einen Winkel von 90°. Der Koordinatenursprung markiert in dieser und allen weiteren Figuren den Drehpunkt D der Welle. Mit dem Außenradius RA wurde ein gestrichelter Kreis um das Profil herum gezeichnet. Die Gehäusebohrung wird durch einen dazu konzentrischen Kreis mit einem gegenüber dem Außenradius um das Spiel S vergrößerten Radius RG repräsentiert. (RG=RA+S) Das Schneckenprofil nach Fig. 2a besteht aus zwei Kreisbögen, die ohne Knick ineinander übergehen. Die Koordinaten der Kreisbögen sind in Fig. 2a angegeben. Der Mittelpunkt $M_1$ des Kreises 1 liegt auf der Horizontalen durch den Drehpunkt und der Mittelpunkt $M_{1'}$ des Kreises 1' auf der Vertikalen durch den Drehpunkt ($M_{1y} = 0$; $M_{1'x} = 0$). Der Übergang von Kreis 1 auf Kreis 1' erfolgt in dem Punkt $P_{FP}$, in dem beide Kreise die Gerade FP tangieren.

Die Konstruktion des gezeigten Profil-Abschnitts kann durch folgende Schritte erfolgen:

- Festlegung eines Punktes $P_A$ in einem Abstand vom Drehpunkt D des Schneckenelements, der dem Außenradius RA des Schneckenelements entspricht,

- Festlegung eines Punktes $P_I$ in einem Abstand vom Drehpunkt D des Schneckenelements, der dem Innenradius RI des Schneckenelements entspricht, wobei Punkt $P_I$ auf einer Geraden $DP_I$ durch den Punkt D liegt, die mit einer Geraden $DP_A$ durch die Punkte $P_A$ und D einen Winkel von $360°/(2·Z)$ einschließt,

- Festlegung einer Geraden FP mit einem Abstand vom Drehpunkt D, der dem halben Achsabstand A des Schneckenelements entspricht, und mit einer Steigung im Bogenmaß von $-1/\tan(\pi/(2·Z))$,

- Festlegung des Schnittpunktes der Tangente $T_A$ in Punkt $P_A$ an den Außenkreis mit Radius RA um den Drehpunkt D mit der Geraden FP und Festlegung des Punktes $P_{FP}$ auf der Geraden FP, der denselben Abstand vom Schnittpunkt hat wie $P_A$ und der vom Drehpunkt einen geringeren Abstand hat als dem Radius RA entspricht,

- Festlegung des Mittelpunkts $M_1$, der im Schnittpunkt der Orthogonalen zur Geraden FP im Punkt $P_{FP}$ mit der Geraden $DP_A$ liegt,

- Festlegung des Mittelpunkts $M_{1'}$, der im Schnittpunkt der Orthogonalen zur Geraden FP im Punkt $P_{FP}$ mit der Geraden $DP_1$ liegt,

- Erzeugen eines Kreisbogens 1 um den Mittelpunkt $M_1$ zwischen den Punkten $P_A$ und $P_{FP}$,

- Erzeugen eines Kreisbogens 1' um den Mittelpunkt $M_{1'}$ zwischen den Punkten $P_I$ und $P_{FP}$.

Fig. 2b zeigt beispielhaft einen Profil-Abschnitt eines erfindungsgemäß verwendeten zweigängigen Schneckenelements aus drei Kreisen. Der Punkt D kennzeichnet den Drehpunkt des Schneckenelements (erzeugendes Schneckenelement). Im Abstand A vom Drehpunkt D befindet sich der Drehpunkt des korrespondierenden Schneckenelements (erzeugtes Schneckenelement). Um den Drehpunkt D ist ein Kreis (Innenkreis) mit dem Kernradius RI und ein Kreis (Außenkreis) mit dem Außenradius RA des Schneckenelements eingezeichnet. Innenkreis und Außenkreis bilden einen Kreisring. Alle Punkte des Profil-Abschnitts sowie des sich daraus ergebenden Gesamtprofils des erfindungsgemäß verwendeten Schneckenelements liegen auf diesem Kreisring. Punkt $P_A$ kennzeichnet einen Anfangspunkt eines ersten Kreisbogens 1 mit dem Radius $R_1$ und dem Mittelpunkt $M_1$, der auf der Verbindungsstrecke $D-P_A$ liegt. Der Punkt $P_A$ liegt auf dem Außenkreis. Punkt $P_I$ kennzeichnet einen Anfangspunkt eines Kreisbogens 3 mit dem Radius $R_3 = A - R_1$. Sein Mittelpunkt $M_3$ liegt auf der Strecke $D-P_I$. Zwischen dem Kreisbogen 1 und dem Kreisbogen 3 schließt sich stetig differenzierbar ein Kreisbogen 2 mit dem Radius $R_2 = A/2$ an. Sein Mittelpunkt $M_2$ befindet sich im Abstand $(A/2)-R_1$ vom Punkt $P_1$ und im Abstand $R_3-(A/2)$ vom Punkt $M_3$. Durch fortlaufende Spiegelung des gezeigten Profil-Abschnitts an einer Geraden, die durch die Punkte D und $P_A$ verläuft und an einer Geraden, die durch die Punkte D und $P_1$ verläuft, lässt sich das Gesamtprofil des erfindungsgemäß verwendeten Schneckenelements (erzeugendes Schneckenelement) konstruieren. Das Profil des korrespondierenden Schneckenelements (erzeugtes Schneckenelement) ergibt sich hier einfach durch Drehung des Profils des erzeugenden Schneckenprofils um einen Winkel von 90° um den Drehpunkt D.

Fig. 2c zeigt ein Beispiel erfindungsgemäß verwendeter Schneckenelemente, bei denen sich die durch gestrichelte Linien gekennzeichneten Profil-Abschnitte nicht durch Achsenspiegelung mit den durch durchgezogene Linien gekennzeichneten Profil-Abschnitten zur Deckung bringen lassen. Stattdessen sind die Profile punktsymmetrisch zum Drehpunkt.

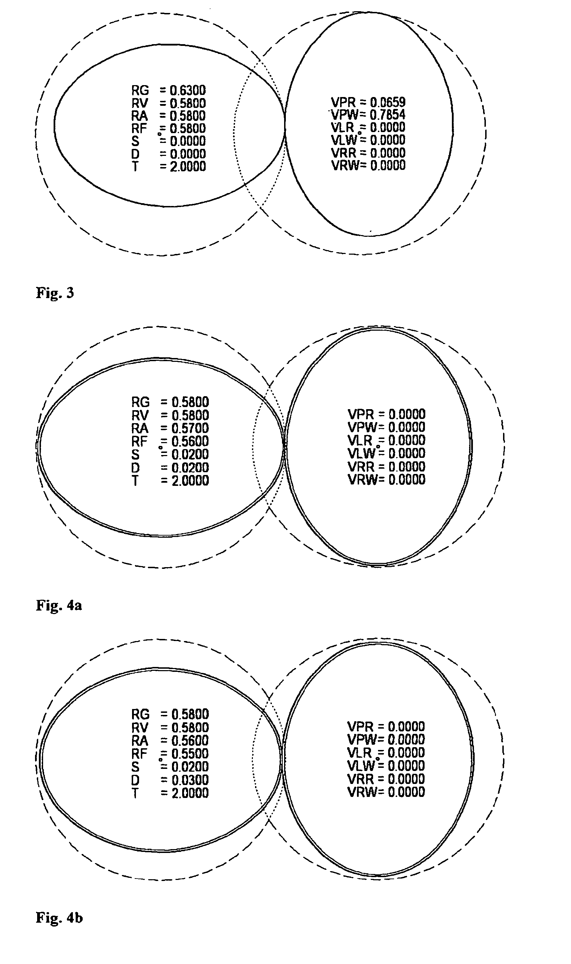

Eine besondere Ausführungsform erfindungsgemäß verwendeter Schneckenelemente ist beispielhaft in Fig. 3 dargestellt. Sie ist dadurch gekennzeichnet, dass die Gehäusebohrungen mit einem größeren Radius als der Außenradius der Schneckenprofile ausgeführt sind und die Schneckenprofile paarweise gegenüber den Mittelpunkten der Gehäusebohrungen verschoben sind, die Drehpunkte (dargestellt durch kleine Kreise) in den Mitten der Gehäusebohrungen jedoch beibehalten werden. Dadurch ergibt sich überraschenderweise eine weitere, deutliche Reduktion der Energieeinleitung. Die auf diese Weise exzentrisch rotierenden Schneckenelemente können innerhalb der Gehäusebohrungen beliebig verschoben werden. In Fig. 3 ist der besonders hervorzuhebende Fall dargestellt, dass die beiden Profile parallel um denselben Betrag in Richtung einer Geraden, die durch die beiden Drehpunkte führt, wie senkrecht dazu verschoben werden, bis sie die Gehäusekontur berühren. Dadurch wird erreicht, dass die Schnecken sich gegenseitig exakt abschaben, jedoch nur jeweils einer der beiden Schneckenkämme jeder Welle das Gehäuse exakt abschabt. Diese Anordnung weist eine-vollständige Abreinigung aller Oberflächen bei gleichzeitig reduzierter Energieeinleitung auf.

Bis hierher wurden nur exakt abschabende Schneckenprofile behandelt. Bei technisch ausgeführten Maschinen ist es aber erforderlich, von der exakt abschabenden Geometrie insofern abzuweichen, als exakt definierte Spalte bei der Abreinigung eingehalten werden. Dies ist notwendig, um metallisches "Fressen" zu verhindern, um Fertigungstoleranzen auszugleichen und um übermäßige Energiedissipation in den Spalten zu vermeiden. Zur Erzeugung gleichmäßiger Spalte sind verschiedene Strategien möglich. Am weitesten verbreitet ist die Erzeugung von Spalten, die in einem Längsschnitt durch die Maschine äquidistant sind. Die Vorgehensweise zur Erzeugung der entsprechenden Schneckenprofile wurde in [1] auf den Seiten 103ff dargestellt.

Die Regeln zur Erzeugung von Schneckenprofilen mit definierten Spalten sind auf die erfindungsgemäß verwendeten Schneckenelemente anwendbar.

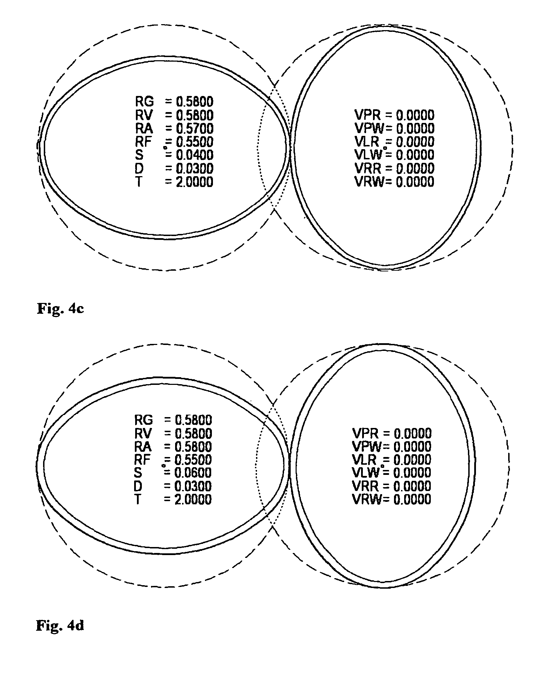

Fig. 4 zeigt Beispiele von Profilen erfindungsgemäß verwendeter Schneckenelemente mit Spalten (Spielen). In Fig. 4a wurde der Spalt S bei der Abreinigung der Schnecken untereinander gleich groß gewählt wie der Spalt D bei der Abreinigung des Gehäuses. In Fig. 4b ist der Spalt S kleiner als D und in Fig. 4c und 4d ist umgekehrt D kleiner als S.

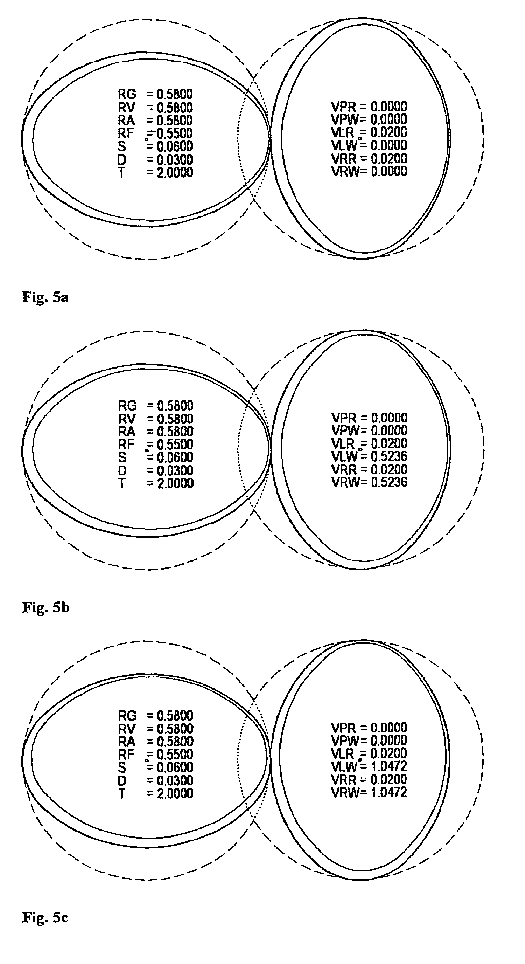

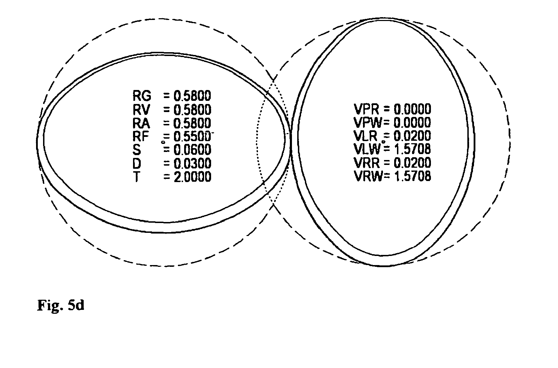

Mit Fig. 5 wird aufgezeigt, dass erfindungsgemäß verwendete exzentrische Profile auch dadurch erhalten werden, dass man ein Schneckenprofil mit Spalten konstruiert und anschließend die Profile innerhalb der Spalte verschiebt. Die Profile von Abbildung 5 a-d sind identisch mit dem Profil aus Abbildung 4d. Die Verschiebung erfolgt in Bezug zu einer Geraden durch die Drehpunkte der Schneckenelemente in Fig. 5a im Winkel von 0°, in Fig. 5b im Winkel von 30°, in Fig. 5c im Winkel von 60° und in Fig. 5d im Winkel von 90°.

Fig. 5 zeigt Beispiele, in denen beide Wellen mit demselben Verschiebevektor verschoben werden. Grundsätzlich ist es auch möglich, beide Wellen innerhalb der Spiele mit einem unterschiedlichen Vektor zu verschieben. Man erhält dann Profile, die sich mit einem Spalt abreinigen, der während einer Umdrehung der Wellen variiert.

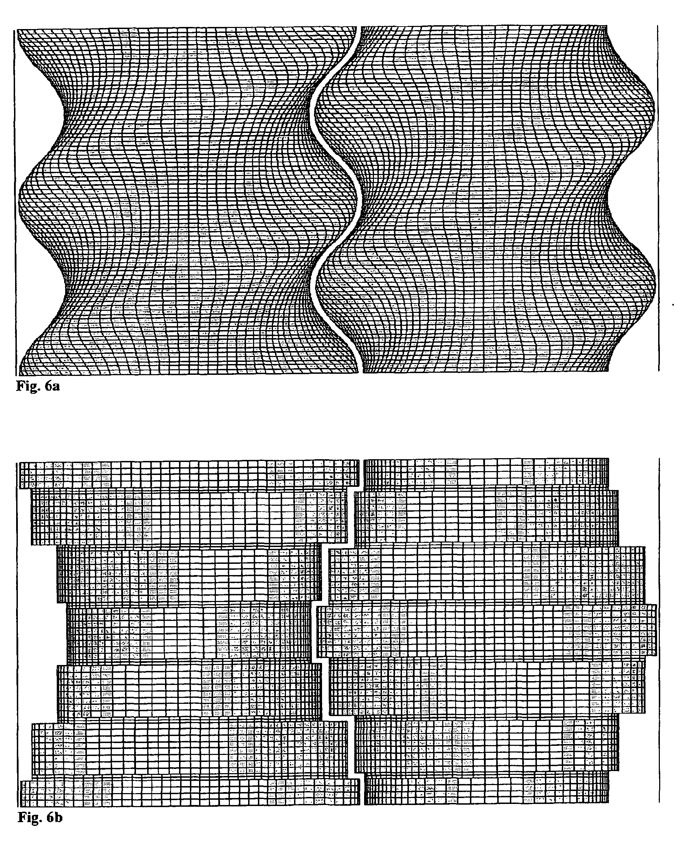

Die Förderwirkung eines Profilpaares kommt bekanntlich dadurch zustande, dass man die Profile in Achsrichtung kontinuierlich schraubenförmig verdreht. Auf diese Weise entsteht ein Fördergewinde, wie es beispielhaft in Fig. 6a dargestellt ist.

Knetelemente mit erhöhter Dispergierleistung gegenüber dem Fördergewinde erhält man, indem man prismatische Scheiben aus selbstreinigenden Profilen um einen Versatzwinkel gegeneinander verdreht auf der Achse anordnet. Ein Beispiel für ein Knetelement mit sieben Knetscheiben, die mit einem Versatzwinkel von 30° auf der Achse angeordnet sind, zeigt Fig. 6b.

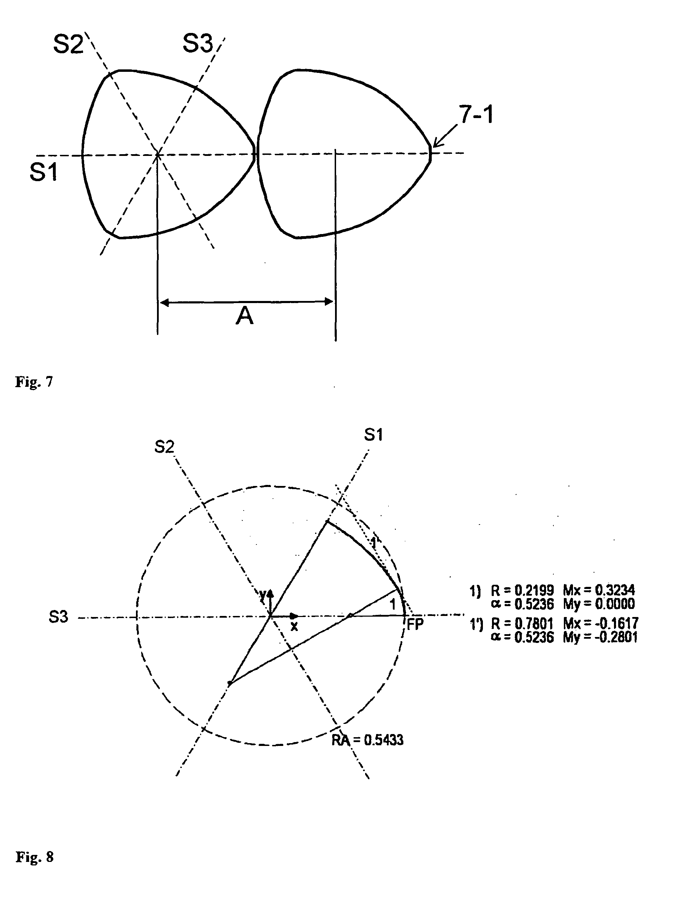

In den Figuren 1 bis 6 wurden ausschließlich zweigängige Schneckenelemente behandelt. Dieselben Prinzipien lassen sich jedoch auch auf Schneckenelemente mit drei und mehr Gängen anwenden. Fig. 7 zeigt im Querschnitt zwei dreigängige Schneckenelemente nach dem Stand der Technik (siehe z.B. [1] S. 103). Das dreigängige Profil in Fig. 7 besteht aus drei symmetrischen Abschnitten. An den Übergängen der Abschnitte treten Knicke auf, und das Profil bildet den Schneckenkamm aus (beispielhaft durch den Pfeil mit 7-1 markiert). Hier rotiert das Profil mit engem Abstand zum Gehäuse und prägt mit den beschriebenen Nachteilen der Polymerschmelze eine reine Scherung auf.

Fig. 8 zeigt dagegen einen Profil-Abschnitt eines erfindungsgemäß verwendeten dreigängigen Schneckenelements. Da das Profil achsensymmetrisch bzgl. dreier in einem Winkel von 60° zueinander angeordneter Geraden (S1, S2, S3) ist, die durch den Koordinatenursprung gehen, ist hier nur ein 60°-Ausschnitt gezeigt. Das gesamte Profil ergibt sich durch fortlaufende Spiegelung der gezeigten Profilkurve an den Spiegelgeraden S1, S2 und S3. Die Profilkurve ist in dem gezeigten Abschnitt zwischen den Geraden S1 und S3 aus zwei Kreisbögen aufgebaut. Für die Schnecke ergibt sich ein konvergent-divergenter Kanal, der über seinen gesamten Umfang dem Mischgut eine Kombination aus Scher- und Dehnströmung aufprägt. Der tangentiale Übergang zwischen den profilerzeugenden Kreisen 1 und 1' erfolgt an der Stelle, an der das Profil die Gerade FP tangiert. Für dreigängige Profile verläuft die Gerade FP in einem Abstand vom halben Achsabstand vom Drehpunkt mit einer Steigung von -1,73. Die in Fig. 8 gezeigte Konstruktion lässt sich in analoger Weise für alle Verhältnisse von Schneckenaußenradius zu Achsabstand von 0,5 bis 0,577 anwenden.

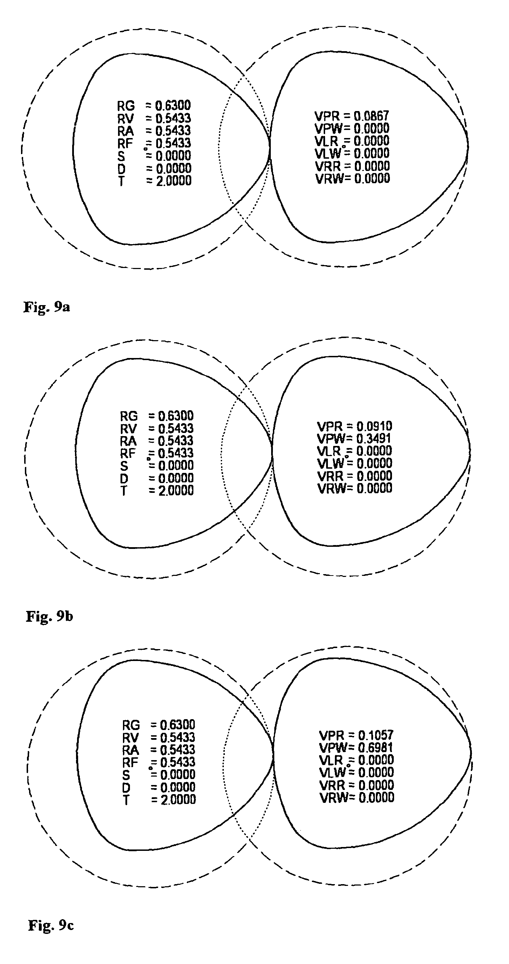

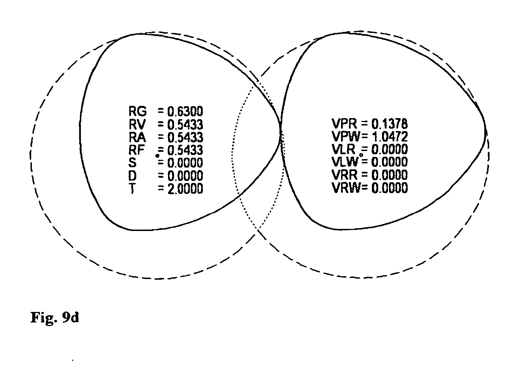

Für die dreigängigen Profile lassen sich exzentrisch rotierende Profile konstruieren. Solche Schneckenprofile werden in Fig. 9 a-d gezeigt. Die Vorgehensweise ist analog zur Vorgehensweise bei den zweigängigen Profilen. Der Außenradius des Profils wird gegenüber dem Gehäuseradius verkleinert und das Profil paarweise verschoben, wobei der Drehpunkt zentrisch zum Gehäuse beibehalten wird. Besonders interessant sind Schneckenprofile, bei denen sich die Schecken untereinander vollständig abreinigen und wo das Gehäuse mit nur einem von drei Kämmen abgereinigt wird. In Fig. 9a ist die Erzeugung eines solchen Profils gezeigt, indem man das Profil horizontal nach rechts verschiebt, bis der rechte Schneckenkamm an der Gehäusekontur ankommt. Bei dieser Anordnung entstehen symmetrische Schneckengänge zwischen dem Profil und dem Gehäuse. Weitere Anordnungen, bei denen einer der drei Schneckenkämme das Gehäuse abreinigt, erhält man bei einer Verschiebung der Profile in einem Winkel von 20° (Fig. 9b) oder 40° in Bezug zu einer Geraden, die durch die Drehpunkte verläuft (Fig. 9c). Bei diesen Profilen ist der entstehende Schneckengang asymmetrisch. Es entsteht mit zunehmender Verschiebung ein Bereich mit intensiverer Scherung (in den Figuren 9b und 9c oben) und ein Bereich mit weniger intensiver Scherung (in den Figuren 9b und 9c unten). Bei Verschiebung des Profils in einem Winkel von 60° in Bezug zu einer Geraden, die durch die Drehpunkte verläuft (Fig. 9d), lässt sich eine Anordnung erzeugen, bei der zwei von drei Kämmen das Gehäuse abreinigen. Die Asymmetrie ist hier am stärksten ausgeprägt. Es entstehen zwei Bereiche mit sehr intensiver Scherbelastung (in Fig. 9d oben) und ein Bereich mit geringer Scherbelastung (in Fig. 9d unten). Die zu verarbeitende Masse wird somit stark wechselnden Beanspruchungen ausgesetzt, was bei Dispergieraufgaben hilfreich ist.

Die Erzeugung von Spalten bei der gegenseitigen Abreinigung der Profile und bei der Abreinigung des Gehäuses erfolgt in völliger Übereinstimmung mit der Vorgehensweise bei den zweigängigen Profilen.

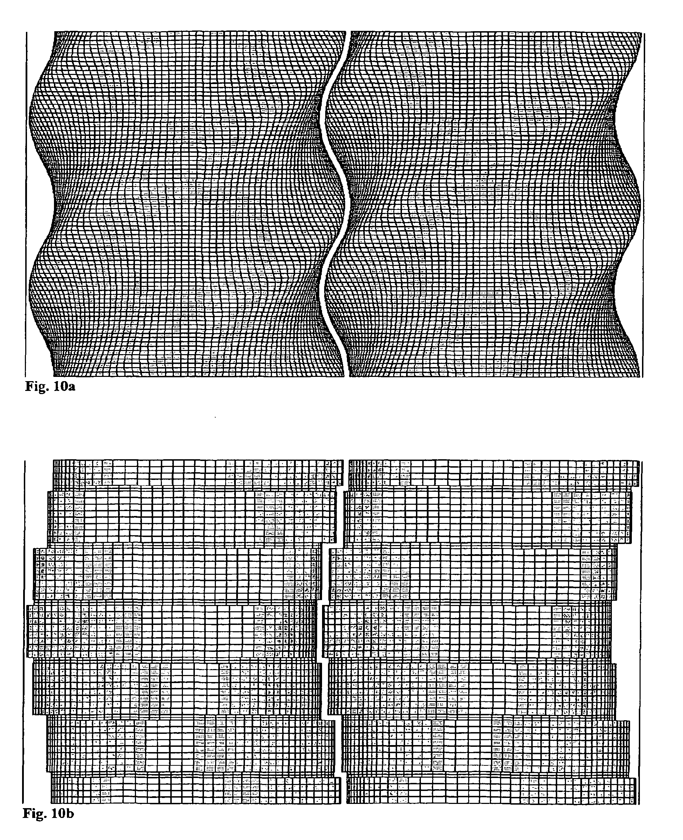

Die dreigängigen Profile können als kontinuierliches Fördergewinde nach Fig. 10a oder als Knetscheiben nach Fig. 10b erfindungsgemäß eingesetzt werden.

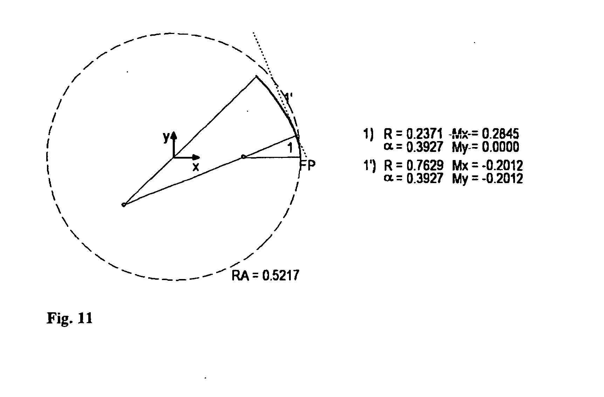

Achsensymmetrische viergängige Schneckenprofile sind durch einen 45°-Abschnitt des Schneckenprofils vollständig definiert. Fig. 11 zeigt einen Profil-Abschnitt eines erfindungsgemäß verwendeten achsensymmetrischen, viergängigen Schneckenelements, der sich aus zwei Kreissegmenten zusammensetzt. Die Konstruktion ist analog für alle Verhältnisse von Schneckenaußenradius zu Achsabstand von 0,5 bis 0,541 anzuwenden.

Die Erzeugung von exzentrischen Profilen und die Erzeugung von Spalten bei der Abreinigung erfolgt auf ähnliche Art und Weise wie bei den zwei- und dreigängigen Profilen und wird hier nicht gezeigt.

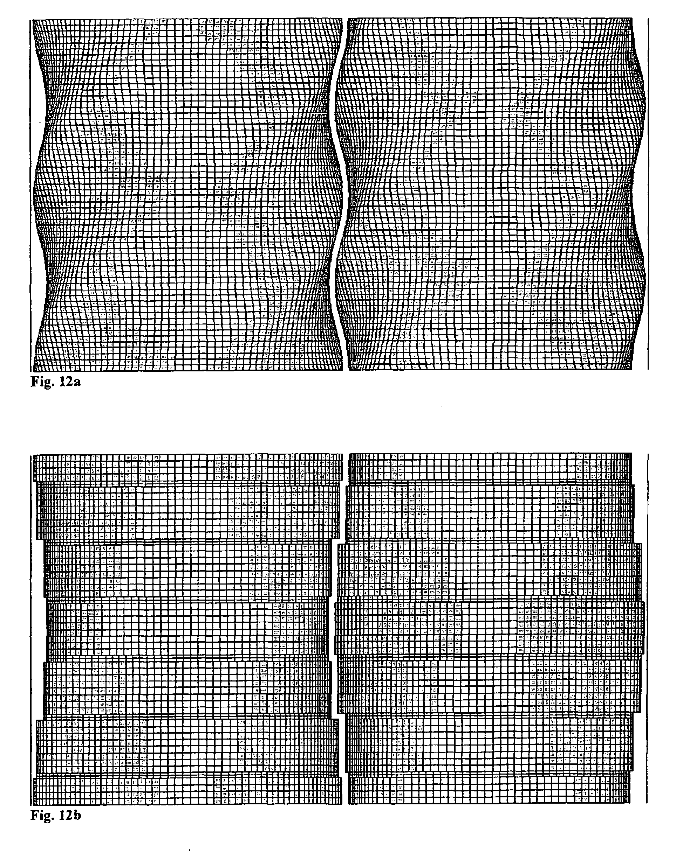

Die viergängigen Profile können als kontinuierliches Fördergewinde nach Fig. 12a oder als Knetscheiben nach Fig. 12b eingesetzt werden.

Erfindungsgemäß verwendete Profile mit mehr als vier Gängen können auf analoge Weise hergestellt werden. Ebenso können auf analoge Weise die Spalte variiert und exzentrische Profile erzeugt werden.

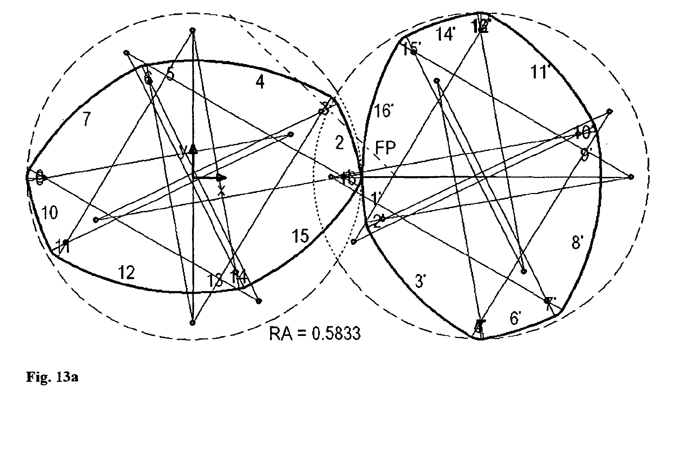

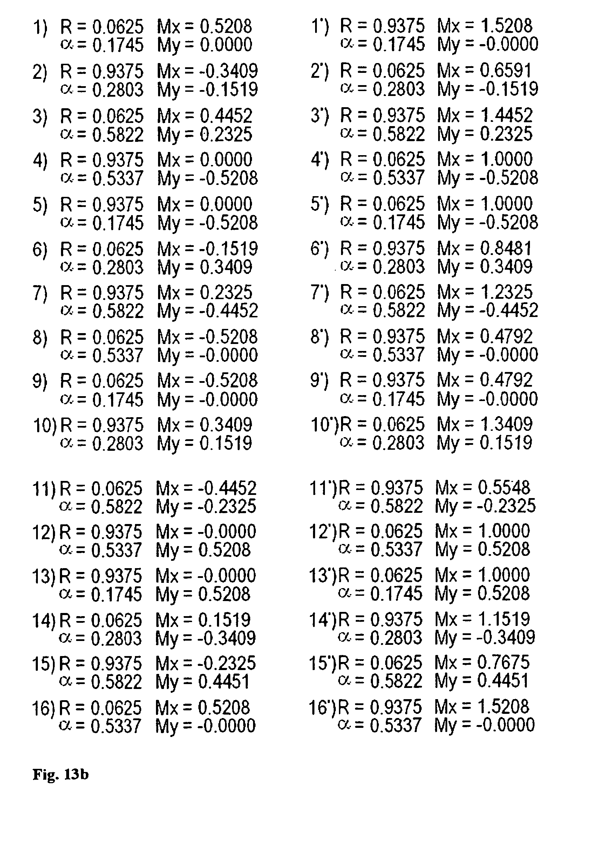

In der Fig. 13a ist schematisch ein Beispiel eines erfindungsgemäß verwendeten Schneckenelementepaares im Querschnitt gezeigt. Das erzeugende Schneckenprofil wird durch das linke Schneckenprofil dargestellt. Das erzeugte Schneckenprofil wird durch das rechte Schneckenprofil dargestellt. Beide Schneckenprofile bestehen aus 16 Kreisbögen. Die Kreisbögen des erzeugenden und des erzeugten Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden (Begrenzungslinien). Der Schneckenaußenradius ist jeweils für das erzeugende und das erzeugte Schneckenprofil gleich groß. Im Bereich des Schneckengehäuses ist der Schneckenaußenradius durch eine dünne gestrichelte Linie gekennzeichnet, im Zwickelbereich durch eine dünne gepunktete Linie. Bedingt durch die Vielzahl der Kreisbögen und bedingt durch die Erzeugung der Figuren mittels eines Computerprogramms kann es vorkommen, dass die Nummern einzelner Kreisbögen mit Begrenzungslinien überlappen und daher schlecht lesbar sind. Trotz der teilweisen schlechten Lesbarkeit einzelner Nummern, wird der Aufbau der Profile aus dem Zusammenhang in Verbindung mit dieser Beschreibung und der Koordinatenangaben in der Fig. 13b dennoch deutlich.

Das in Fig. 13a gezeigte erfindungsgemäß verwendete Paar von Schneckenprofilen ist punktsymmetrisch, aber nicht achsensymmetrisch. Die Gerade FP (gepunktet gezeichnet) wird nicht tangiert. Ein derartiges Schneckenelement erlaubt besonders große Freiheiten für die Dispergierwirkung, da die Bereiche vor und nach den Kämmen, die für die Dispergierwirkung entscheidend sind, genau auf die Aufgabe angepasst werden können, ohne auf die geometrische Einschränkung durch die Gerade FP Rücksicht nehmen zu müssen. Fig. 13b zeigt für alle Kreisbögen der Fig. 13a die x- und y-Koordinaten (Mx und My) der Mittelpunkte, die Radien R und die Winkel $\alpha$ der Kreisbögen. Die Winkelangaben erfolgen im Bogenmaß; alle übrigen Maßangaben sind auf den Achsabstand normiert und daher dimensionslos.

Plastische Massen, die erfindungsgemäß mit hoher Effizienz bei gleichzeitiger Produktschonung extrudiert werden können , sind z.B. Suspensionen, Pasten, Glas, Keramische Massen, Metalle in Form einer Schmelze, Kunststoffe, Kunststoffschmelzen, Polymerlösungen, Elastomer- und Kautschuk-Massen.

Bevorzugt werden Kunststoffe und Polymerlösungen eingesetzt, besonders bevorzugt thermoplastische Polymere. Als thermoplastisches Polymer wird bevorzugt wenigstens eines aus der Reihe Polycarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrytnitrilcopolymer, Acrylnitrilbutadienstyrolblockcopolymere und Polyvinylchlorid eingesetzt. Ebenso bevorzugt eingesetzt werden so genannte Blends aus den aufgeführten Kunststoffen, worunter der Fachmann eine Kombination aus zwei oder mehreren Kunststoffen versteht. Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofürane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern

Die Vorteile, die sich bei Einsatz des Verfahrens für die verschiedenen Polymere ergeben, sind je nach Art des Extrusionsprozesses und der Art der plastischen Masse unterschiedlich.

Bei der Extrusion von Polyethylen und Polyethylen-Copolymere zeigen sich bei zu hoher Temperatur Aufbau von Molekulargewicht, Verzweigung und Vernetzung. Weiterhin reagieren Polyethylen und Polyethylen-Copolymere mit Luftsauerstoff in dem dem Fachmann bekannten Autoxidationszyklus ([2] Hepperle,J.: Schädigungsmechanismen bei Polymeren. Polymeraufbereitung 2002, VDI-K, VDI-Verlag GmbH, [3] Zweifel, H.: Stabilization of Polymeric Materials. Berlin: Springer 1997, [4] Schwarzenbach, K., et al.: Antioxidants, in Zweifel, H. (Hrsg.): Plastics Additives Hand-book. München: Hanser 2001, [5] Cheng, H.N., Schilling, F.C., Bovey, F.A.: 13C Nuclear Magnetic Resonance Observation of the Oxidation of Polyethylene, Macromolecules 9 (1976) S. 363-365) unter Bildung von geruchsintensiven und daher störenden niedermolekularen Komponenten wie beispielsweise Ketone, Aldehyde, Carbonsäuren und Alkohole.

Bei der Extrusion von Copolymeren auf Basis Polyethylen und Vinylacetat bildet sich bei zu hoher Temperatur zusätzlich geruchsintensive und korrosive Essigsäure.

Bei der Extrusion von Polypropylen und Polypropylen-Copolymeren zeigt sich zu hoher Temperatur Abbau von Molekulargewicht. Weiterhin reagieren Polyproplyen und Polypropylen-Copolymere mit Luftsauerstoff in dem Autoxidationszyklus unter Bildung von geruchsintensiven und daher störenden niedermolekularen Komponenten wie beispielsweise Ketone, Aldehyde, Carbonsäuren und Alkohole.

Bei der Extrusion von Polyvinylchlorid spaltet bei zu hoher Temperatur Polyvinlychlorid unter Verfärbung korrosives Salzsäuregas ab, wobei die Salzsäure wiederum katalytisch bei der weiteren Abspaltung von Salzsäure wirkt.

Bei der Extrusion von Polystyrol bildet sich bei zu hoher Temperatur gesundheitsschädliches Styrol sowie dimeres und trimeres Styrol, mit Abbau von Molekulargewicht und entsprechendem Verschlechterung von mechanischen Eigenschaften.

Bei der Extrusion von Polystyrol - Acrylnitril - Copolymer (SAN) verfärbt sich das Produkt unter thermischer Belastung zum Gelben hin, was zu verringerter Transparenz führt, und bildet das krebserregende Monomer Acrylnitril sowie Styrol, unter Abbau von Molekulargewicht und Verschlechterung von mechanischen Eigenschaften.

Bei der Extrusion von aromatische Polycarbonaten verfärbt sich unter zu hoher thermischer Belastung, insbesondere unter Sauerstoffeinfluss, zum Gelben hin, was zu verringerter Transparenz führt, und zeigt Abbau im Molekulargewicht, insbesondere unter Einfluss von Wasser. Auch werden unter erhöhter Temperatur Monomere wie z.B. Bisphenol A, zurückgespalten.

Bei der Extrusion von Polyestern wie z.B. Polyethylenterephtalat, Polybutylenterephtaltat, Polytrimethylenterephthalat oder Polylactiden ergibt sich unter zu hoher Temperatur und Wassereinfluss eine Verringerung im Molekulargewicht und Verschiebung der Endgruppen im Molekül. Dies ist vor allem beim Recycling von Polyethylenterephtalat problematisch. Polyethylenterephtalat spaltet bei hoher Temperatur Acetaldehyd ab, was beispielsweise zu Veränderungen an Geschmack in dem Inhalt von Getränkeflaschen führen kann.

Bei der Extrusion von mit Dienkautschuken, insbesondere mit Butadienkautschuk schlagzäh modifizierten Thermoplasten, insbesondere schlagzäh modifizierte Polystyroltypen (HIPS) und schlagzäh modifiziertes SAN (Acrylnitril-Butadien-Styrol, ABS) spaltet sich unter zu hoher Temperatur krebserregendes Butadien sowie giftiges Vinylcyclohexen ab. Weiterhin vernetzt der Dienkautschuk, so dass Verschlechterungen der mechanischen Eigenschaften des Produktes auftreten.

Bei der Extrusion von Polyoxymethylen spaltet sich bei zu hoher Temperatur giftiges Formaldehyd ab.

Bei der Extrusion von Polyamiden wie Polyamid 6, Polyamid 6,6, Polyamid 4,6, Polyamid 11 und Polyamid 12 führt zu hohe Temperatur zu Verfärbungen des Produktes und zu Molekulargewichtsabbau und zur Rückbildung von Monomeren und Dimeren und damit zu Verschlechterung von mechanischen Eigenschaften, vor allem in Gegenwart von Wasser.

Bei der Extrusion von thermoplastischen Polyurethanen führt zu hohe Temperatur zu Veränderungen der Molekülstruktur durch Umurethanisierung und, in Gegenwart von Wasser, zu Molekulargewichtsabbau. Beides beeinflusst die Eigenschaften des thermoplastischen Polyurethans in unerwünschter Weise.

Bei der Extrusion Polymethylmethacrylat spaltet bei zu hoher thermischer Belastung unter Abbau von Molekulargewicht Methylmethacrylat ab, was zu Geruchsbelästigung und zu verschlechterten mechanischen Eigenschaften führt.

Bei der Extrusion von Polyphenylensulfid werden bei zu hoher Temperatur schwefelhaltige organische und anorganische Verbindungen abgespalten, die zu Gerunchsbelästigung führen und zu Korrosion der Extrusionswerkzeuge führen kann. Auch werden hierbei niedermolekulare Oligomere und Monomere gebildet und Molekulargewicht abgebaut, was die mechanischen Eigenschaften von Polyphenylensulfid verschlechtert.

Bei der Extrusion von Polyphenylsulfon werden bei zu hoher Temperatur organische Verbindungen abgespalten, vor allem in Gegenwart von Wasser. Auch reduziert sich das Molekulargewicht, wodurch die mechanischen Eigenschaften verschlechtert werden.

Bei der Extrusion von Polyphenylenether werden bei zu hoher Temperatur niedermolekulare organische Verbindungen abgespalten, wobei sich das Molekulargewicht reduziert. Dies führt zu einer Verschlechterung der mechanischen Eigenschaften des Produktes.

Bei der Extrusion von Dien-Kautschuken wie beispielsweise Polybutadien (BR), Naturkautschuk (NR) und synthetisches Polyisopren (IR), Butylkautschuk (IIR), Chlorbutylkautschuk (CIIR), Brombutylkautschuk (BIIR), Styrol-Butadien-Kautschuk (SBR), Polychloropren (CR), Butadien-Acrylnitril-Kautschuk (NBR), teilweise hydrierter Butadien-Acrylnitril-Kautschuk (HNBR) sowie Ethylen-Proplyen-Dien-Copolymere (EPDM) bildet sich bei zu hoher Temperatur durch Vernetzung Gel, das zu Verschlechterung von mechanischen Eigenschaften der daraus hergestellten Bauteile führt. Bei Chlor- und Brombutylkautschuk kann unter erhöhter Temperatur korrosives Salzsäure- bzw. Bromwasserstoffgas abgespalten werden, das wiederum die weitere Zersetzung des Polymers katalysiert.

Bei der Extrusion von Kautschukmischungen, die Vulkanisatoren wie z.B. Schwefel oder Peroxide enthalten, werden durch zu hohe Temperaturen zum vorzeitigen Vulkanisieren gebracht. Dies führt dazu, dass aus diesen Kautschukmischungen keine Produkte mehr hergestellt werden können.

Bei der Extrusion von Mischungen aus einem oder mehreren Polymeren bei zu hohen Temperaturen treten jeweils die Nachteile der Extrusion der einzelnen Polymere auf.

Der Teilprozess der Entgasung von Polymeren bei der Herstellung wird auf sogenannten Entgasungsextrudern durchgeführt. Entgasungsextruder sind dem Fachmann im Prinzip bekannt und beispielsweise in [1] beschrieben. Kennzeichnend für Entgasungsextruder sind die sogenannten Entgasungsdorne. Dies sind Gehäuse mit Öffnungen, durch die die enstehenden Brüden entweichen können. Verschiedene Entgasungsdorne können bekanntlich bei verschiedenen Drücken betrieben werden, wenn zwischen den Entasungsdomen das Produkt abgestaut wird, so dass es eine Abdichtung zwischen den verschiedenen Drücken bildet.

Die erfindungsgemäß verwendeten Schneckenelemente werden bevorzugt in teilgefüllten Zonen und besonders bevorzugt in den Entgasungszonen eingesetzt.

Ein erfindungsgemäß verwendeter Entgasungsextruder kann auf verschiedene Art mit Produkt beschickt werden, abhängig von der Art, in der das Polymer anfällt. In einer bevorzugten Variante wird der Extruder mit einer flüssigen Phase beschickt, die neben dem Polymer noch Lösungsmittel und ggf. Restmonomere enthalten kann. Die Form, in der Polymere-nach der Reaktion und ggf. einer Voreindampfung anfallen, ist dem Fachmann bekannt. Beispiele hierfür sind

- Polystyrol mit Rest-Styrol und evtl. Ethylbenzol, Toluol, Xylol, Butanon oder einem anderen Lösemittel

- Copolymer von Styrol und Acrylnitril mit Rest-Styrol, Rest-Acrylnitril, und evtl. Ethylbenzol, Toluol, Xylol, Butanon oder einem anderen Lösemittel

- Lineares Polyethylen niedriger oder hoher Dichte, verzweigtes Polyethylen mit Lösemittel wie Hexan, technisches Hexan, Propan, Isobutan und Monomeren wie Propylen, Buten-1, Hexen-1, 4-Methylpenten-1, Octen-1 (Prozesse mit Suspensionen sind: CX Prozess von Mitsui Chemicals (Hexan), Hostalen Prozess von Basell (Hexan), Chevron Philips USA (Isobutan), Borstar Prozess von Borealis (Propan) Belgien, und DSM nutz Hexan in einem Lösungsmittelprozess) Detail dazu sind in [6] (Comparative Analysis of Various Polyethylene Production Technologies, Chem. And Petroleum Eng. Vol. 44, Nos. 7-8, 2008) beschrieben

- Polycarbonat mit Lösemittel, z.B. Chlorbenzol und Methylenchlorid

- Polymethylmethacrylat mit Monmer, d.h. Methylmethacrylat

In einer bevorzugten Variante wird einem flüssig beschickter Entgasungsextruder mit einer sogenannten Rückwärtsentgasung das Produkt zugeführt. Dabei wird eine gegebenenfalls vorgeheizte Polymerlösung in einen Zweischneckenextruder eingebracht und schäumt dort auf. Die Gase werden dann durch die Gänge des Zweischneckenextruders rückwärts zu einem Entgasungsdom abgeführt. Allgemein ist eine derartige Rückwärtsentgasung Stand der Technik und z.B. in [1] auf den Seiten 193-195 beschrieben. Die Konzentration an Polycarbonat der Lösung beträgt in diesem Fall bei dem Eintritt in den Extruder bevorzugt zwischen 55 Masse-% und 95 Masse-%, besonders bevorzugt zwischen 65 Masse-% und 90 Masse-%.

In einer weiteren bevorzugten Variante, einem flüssig beschickten, den Entgasungsextruder das Produkt zuzuführen, besteht in einer Flashverdampfung am Eintritt des Extruders. Bevorzugt wird ein Flash direkt über dem Extruder, so dass die teilentgaste Schmelze direkt auf die Schneckenwellen fällt. Die bei dem Flash entstehenden Brüden werden bevorzugt aus einem Abscheidebehälter, der ebenfalls über dem Extruder liegt, mittels einer oder mehrerer Brüdenleitungen abgezogen. Die Temperatur der Polymerlösung beträgt bevorzugt im Bereich von 180°C bis 300°C, besonders bevorzugt zwischen 200°C und 250°C. Der Flash wird bevorzugt in einem Druckbereich zwischen 0,3 bar abs und 6 bar abs betrieben, besonders bevorzugt zwischen 0,5 bar abs und 2 bar abs.

In einer weiteren bevorzugten Variante, einem flüssig beschickten Entgasungsextruder Produkt zuzuführen, besteht in einem Rohrbündel-Wärmetauscher am Eintritt des Extruders, der oberhalb der Wellen des Extruders angeordnet ist, so dass die aus den Rohren austretende teilentgaste Polymerlösung direkt auf die Wellen fallen kann. Zwischen dem Austritt des Rohrbündel-Wärmetauscher und den Extruderwellen befindet sich noch ein Abscheidebehälter, in dem Brüden und Polymerlösung voneinander getrennt werden und der über mindestens einen Auslass für die Brüden verfügt. Die Polymerlösung wird durch eine Eintrittsöffnung am oberen Ende des Fallrohrverdampfers eingeleitet und über einen Verteilerboden einer Vielzahl von Rohren zugeführt, die von außen beheizt werden. Bevorzugt erfolgt die Beheizung über kondensierenden Wasserdampf, einen kondensierenden organischen Wärmeträger oder über einen flüssigen organischen Wärmeträger. Über die Innenoberfläche der Rohre wird die Wärmeenergie zur Verdampfung von Lösungsmittel in die Polycarbonatschmelze eingetragen. Dabei verdampfen Lösungsmittelanteile und bilden ein zweiphasiges Gas-Flüssig-Gemisch aus. So wird gezielt eine Überhitzung der Polymerschmelze vermieden. Das entweichende dampfförmige Lösungsmittel bewirkt eine ständige Durchmischung und Oberflächenerneuerung der Polymerschmelze, was deren effizientere Aufkonzentrierung bewirkt. Es wird auf diese Weise dem Ausdampfextruder eine deutlich höher konzentrierte Polycarbonatschmelze zugeführt, so dass sowohl die Energie-Eintragung als auch die Verweilzeit der Polycarbonatschmelze im Extruder geringer sein können, um die gleiche oder gar höhere Restentgasung der Polycarbonatschmelze zu bewirken. Bevorzugt ist die Konzentration der Polymer-Lösung im Eintritt in den Rohrbündel-Wärmetauscher zwischen 50 und 80 Gew%. Die Heiztemperatur der Rohre beträgt von 240°C bis 360°C, bevorzugt von 250°C bis 340°C und ganz besonders bevorzugt von 260°C bis 300°C. Die Polymerkonzentration am Eintritt in den Extruder beträgt zwischen 80 und 99 Gew%, bevorzugt 90 bis 99 Gew.%. Der Druck im Abscheidebehälter beträgt bevorzugt zwischen 0,3 bar abs und 6 bar abs, besonders bevorzugt zwischen 0,5 bar abs und 2 bar abs.

Eine weitere bevorzugte Art, einen flüssig beschickten Entgasungsextruder mit Produkt zu beschikken, besteht in einem Schaumverdampfer, wie er beispielsweise in der EP 1 740 638 für Polycarbonat beschrieben ist. Ein Schaumverdampfer kann aus beispielsweise aus einem Rohrbündel oder aus einer Düsenplatte bestehen. Aus den Öffnungen des Schaumverdampfers schäumt die Polymerschmelze auf und wird bis auf geringe Restgehalte von Restlösemittel befreit.

Dieser Schaumverdampfer ist bevorzugt oberhalb der Wellen des Extruders so angeordnet, dass die aus den Rohren austretende Polymerlösung direkt auf die Wellen fallen kann. Zwischen dem Austritt des Rohrbündel-Wärmetauscher und den Extruderwellen befindet sich noch ein Abscheidebehälter, in dem Brüden und Polymerlösung voneinander getrennt werden und der über mindestens einen Auslass für die Brüden verfügt.

Besonders bevorzugt wird als Polymerlösung eine Polycarbonatlösung eingesetzt.

In diesem Fall beträgt die Konzentration der Polycarbonatlösung im Eintritt des Schaumverdampfers zwischen 90 Gew-% und 99,95 Gew-%. Optional ist der Polycarbonatlösung noch ein Schäumungsmittel wie beispielsweise Stickstoff, $CO_2$, zugegeben. Der Dampfdruck des Schäumungsmittels gemeinsam mit dem Rest-Lösemittel beträgt 0,1 bis 100 bar, bevorzugt 0,5 bis 60 bar und besonders bevorzugt 1 bis 40 bar. Der Druck im Abscheider beträgt Durch die Öffnungen des Schaumverdampfers wird die Polymerlösung in Teilströme zwischen 0,1 und 20 mbar aufgeteilt. Die Temperatur der Polymerlösung beträgt zwischen 250°C und 340°C. Der Druck im Abscheidebehälter beträgt bevorzugt zwischen 0,1 und 20 mbar.

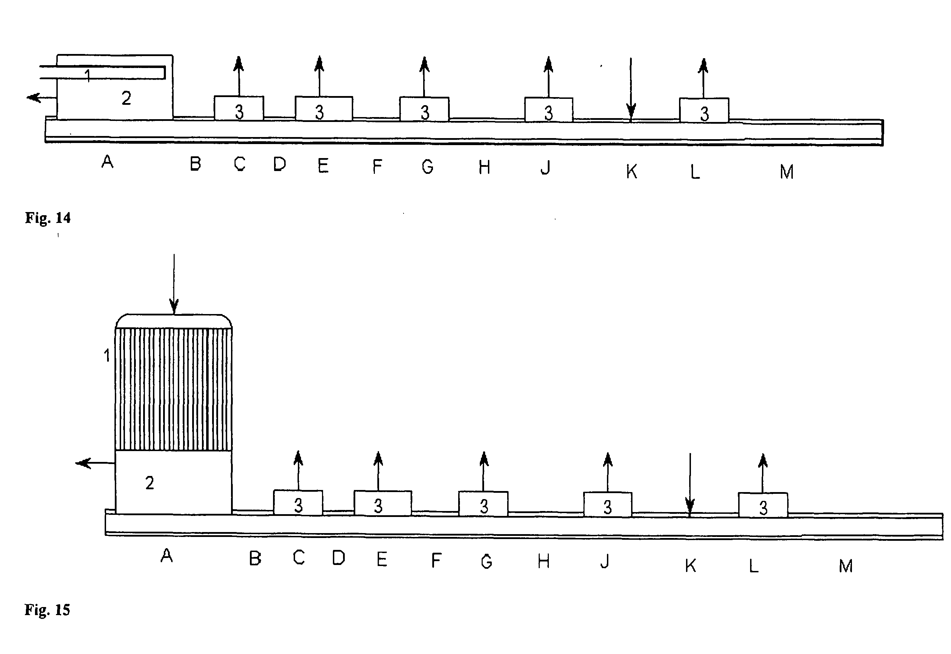

Fig. 14 zeigt eine bevorzugte Ausführungsform, in der die Schneckenelemente in einem Entgasungsextruder verwendet werden. In der Zone A wird durch ein Flashrohr 1 die Polycarbonat-Lösung dem Extruder zugegeben. Die Brüden werden im Entgasungsbehälter 2 von der Polycarbonatlösung getrennt. Zonen C, E, G J und L sind Entgasungszonen. Die dort freiwerdenden Brüden werden in den Entgasungsdomen 3 abgezogen. Zonen B, D, F und H sind Stauzonen, bei denen durch ein abstauendes Element ein Produktpropfen erzeugt wird, der die Einstellung von unterschiedlichen Drücken in den jeweils benachbarten Zonen ermöglicht. In Zone K wird zusätzlich Schleppmittel zugegeben, um die Entgasung in Zone L effektiver zu gestalten. In Zone M wird das Polymer mit einem Seitenstrom mit Additiven vermischt und der Druck für die Filtrierung und Düse, die auf den Extruder folgen, aufgebaut.

Fig. 15 zeigt eine weitere bevorzugte Ausführungsform, in der die Schneckenelemente in einem Entgasungsextruder verwendet werden. In der Zone A wird durch einen vertikalen Vorwärmer 1 die Polycarbonat-Lösung dem Extruder zugegeben. Die Brüden werden im Entgasungsbehälter 2 von der Polycarbonatlösung getrennt. Zonen C, E, G J und L sind Entgasungszonen. Die dort freiwerdenden Brüden werden in den Entgasungsdomen 3 abgezogen. Zonen B, D, F und H sind Stauzonen, bei denen durch ein abstauendes Element ein Produktpropfen erzeugt wird, der die Einstellung von unterschiedlichen Drücken in den jeweils benachbarten Zonen ermöglicht. In Zone K wird zusätzlich Schleppmittel zugegeben, um die Entgasung in Zone L effektiver zu gestalten. In Zone M wird das Polymer mit einem Seitenstrom mit Additiven vermischt und der Druck für die Filtrierung und Düse, die auf den Extruder folgen, aufgebaut.

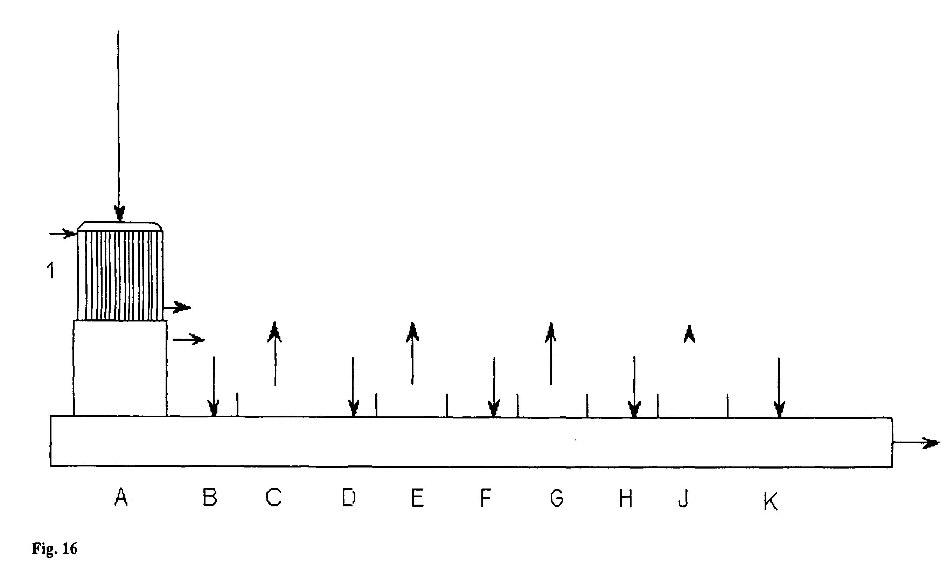

**Fig. 16** zeigt eine weitere bevorzugte Ausführungsform, in der die Schneckenelemente in einem Entgasungsextruder verwendet werden, mit einem Schaumverdampfer am Eintritt. In der Zone A wird durch einen Schaumverdampfer 1 die Polycarbonat-Lösung dem Extruder zugegeben. Die Brüden werden im Abscheider 2 von der Polycarbonatlösung getrennt. In den Zonen B, D, F und H wird jeweils Schleppmittel zugegeben und dispergiert. In den Zonen C, E, F, G und J werden die flüchtigen Bestandteile vom Polymer getrennt. In der In Zone K wird das Polymer mit einem Seitenstrom mit Additiven und ggf. weiterem Polymer vermischt und der Druck für die Filtrierung und Düse, die auf den Extruder folgen, aufgebaut.

Ein mit den Schneckenelementen ausgestatteter Zwei- oder Mehrwellenextruder kann bei der Herstellung von Polymeren auch mit Partikeln beschickt werden. In diesem Fall dient ein erfindungsgemäßer Extruder vor allem zum Aufschmelzen, zur Konfektionierung und zum Mischen mit Additiven. Die Form, in der die Polymere nach der Reaktion und ggf. einer Voreindampfung oder Fällung anfallen, sind dem Fachmann bekannt. Beispiele hierfür sind

- Polypropylen, bei dem das Polymer in Form von Pulver nach der letzten Reaktion anfällt

- Polyethylen hoher Dichte aus einem Gasphasen- oder Slurryprozess

- Emulsionspolymerisate wie beispielsweise Acrylnitril-Butadien-Styrol nach der Fällung und ggf. Trocknung

Bei der Aufarbeitung eignet sich ein Doppel- oder Mehrwellenextruder, der mit den Schneckenelementen ausgestattet ist, besonders für Aufgaben mit Entgasung. Besondere Vorteile ergeben sich dabei bei der direkten Aufarbeitung von Recycling -Polyethylenterephthalat aus Flaschenware, die eine Entgasung bei minimaler Temperaturbelastung erfolgt.

Besonders bevorzugt wird das erfindungsgemäße Verfahren bei der Herstellung und der Compoundierung von Polycarbonat angewendet. Hierbei bietet es Vorteile vor allem bei der Farbe des Polycarbonats, bei nicht eingefärbtem Polycarbonat gemessen mit dem Yellowness Index (YI). Die erfindungsgemäß verwendeten Schneckenelemente werden hierbei besonders bevorzugt in der Entgasungszone eingesetzt.

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (<2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon- und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Die nach dem erfindungsgemäßen Verfahren erhaltenen plastische Massen können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern).

Die folgenden Beispiele dienen der exemplarischen Erläuterung der Erfindung und sind nicht als Beschränkung aufzufassen.

Das Druckaufbauvermögen, der Leistungsbedarf und die maximale Temperaturerhöhung von Schneckenelementen mit einem zweigängigen Erdmenger-Schneckenprofil nach dem Stand der Technik und von erfindungsgemäß verwendeten Schneckenelementen mit neuartigen Schneckenprofilen wurden mit Hilfe der Strömungssimulation berechnet.

Wie der Fachmann weiß und wie es in [1] auf den Seiten 129 bis 146 nachzulesen ist, kann das Betriebsverhalten von Schneckenelementen wie Förder-, Knet- und Mischelementen durch eine Druckdifferenz-Durchsatz- und durch eine Leistungs-Durchsatz-Charakteristik beschrieben werden. Um eine Übertragbarkeit auf unterschiedliche Extrudergrößen zu erleichtern, werden die Größen Druckdifferenz, Leistung und Durchsatz häufig in ihrer dimensionslosen Form verwendet. Im Fall einer plastischen Masse mit Newtonschem Fließverhalten ergibt sich ein linearer Zusammenhang sowohl zwischen Druckdifferenz und Durchsatz als auch zwischen Leistung und Durchsatz. In der Druckdifferenz-Durchsatz-Charakteristik werden die Achsenschnittpunkte mit A1 und A2 gekennzeichnet ([1], Seite 133). Der Betriebspunkt A1 kennzeichnet den Eigendurchsatz eines Schneckenelements. Der Betriebspunkt A2 kennzeichnet das Druckaufbauvermögen ohne Durchsatz. In der Leistungs-Durchsatz-Charakteristik werden die Achsenschnittpunkte mit B1 und B2 gekennzeichnet ([1], Seite 136). Der Punkt B1 ist der sogenannte Turbinenpunkt. Ist der Durchsatz größer als B1, so wird Leistung an die Schneckenwellen abgegeben. Der Betriebspunkt B2 kennzeichnet den Leistungsbedarf ohne Durchsatz.

In einer Druckaufbauzone kann nur ein Teil der eingebrachten Leistung in Strömungsleistung überführt werden. Der Rest der eingebrachten Leistung dissipiert. Die Strömungsleistung berechnet sich als Produkt von Durchsatz und Druckdifferenz. Wie der Fachmann leicht erkennt, ist die Strömungsleistung an den Achsenschnittpunkten A1 und A2 jeweils gleich 0, da entweder die Druckdifferenz gleich 0 (A1) oder der Durchsatz gleich 0 (A2) ist. Im Bereich zwischen A1 und A2 sind sowohl die Druckdifferenz als auch der Durchsatz größer 0 und es ergibt sich eine positive Strömungsleistung. Dividiert man die Strömungsleistung eines Betriebspunkts gegeben durch einen Durchsatz durch die zu diesem Betriebspunkt von den Schneckenwellen abgegebene Leistung, so erhält man den Wirkungsgrad zum Druckaufbau an diesem Betriebspunkt. Durch Ableitung des Wirkungsgrads nach dem Durchsatz und anschließende Nullstellensuche lässt sich der maximale Wirkungsgrad eines Schneckenelements finden.

Die Strömungsberechnung innerhalb eines Paars von Schneckenelementen wurde für das Druckaufbauvermögen und den Leistungsbedarf mit der kommerziell erhältlichen Software Fluent in der Version 6.3.26 und für die maximale Temperaturerhöhung mit der Open Source Software Open-FOAM in der Version 1.5 durchgeführt. Eine Einführung zur Strömungssimulation von Zweiwellenschnecken findet sich zum Beispiel in [1], Seiten 147 - 168.

In der Strömungssimulation wurden jeweils Schneckenelemente untersucht, deren Länge gleich der halben Steigung ist. Diese Schneckenelemente wurden in der Strömungssimulation an ihrem axialen Anfang und ihrem axialen Ende mit periodischen Randbedingungen versehen, um einen hydrodynamisch eingelaufen Strömungszustand zu berechnen.

Als plastische Masse wurde ein Fluid mit Newtonschem Fließverhalten verwendet. Als Stoffdaten wurden typische Werte verwendet, wie sie z.B. aus dem Buch Polymeraufbereitung 2002, VDI-K, VDI-Verlag, Düsseldorf, 2002 auf der Seite 159 entnommen werden können. Die Dichte der plastischen Masse beträgt 1000 kg/m³. Die Viskosität der plastischen Masse beträgt 1000 Pa*s. Die Wärmeleitfähigkeit der plastischen Masse beträgt 0,2 W/m/K. Die Wärmekapazität der plastischen Masse beträgt 2000 J/kg/K.

**Beispiele**

**Vergleichsbeispiel 1:**

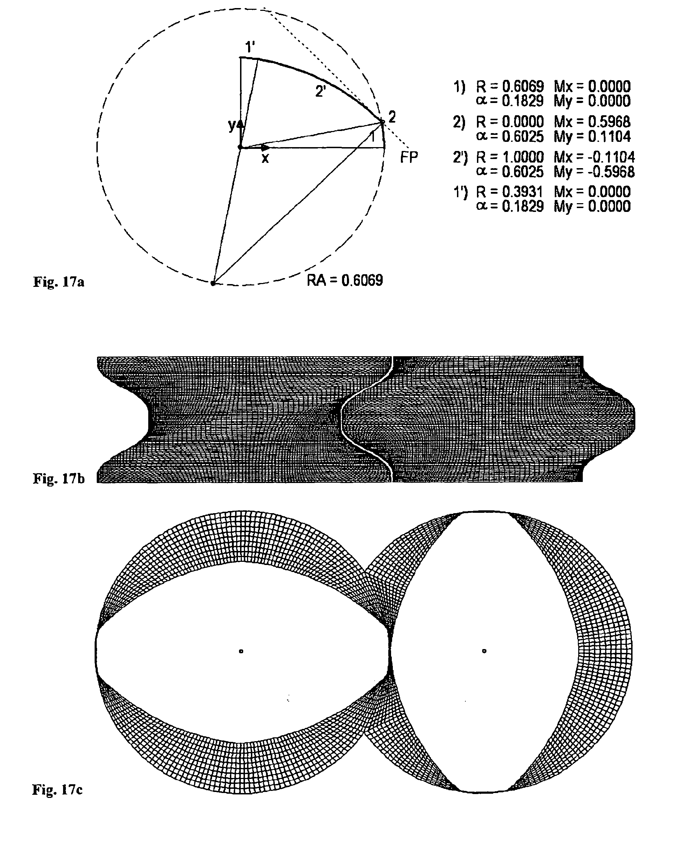

Die Geometrie des Förderelements nach dem Stand der Technik kann aus den Figuren 17a bis 17c entnommen werden.

Die Figur 17a zeigt im Querschnitt ein Viertel eines Schneckenprofils eines Schneckenelements mit einem Erdmenger-Schneckenprofil nach dem Stand der Technik. In der Mitte der Figur liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt. Der dimensionslose Schneckenaußenradius RA wird durch eine dünne, gestrichelte Linie charakterisiert, dessen Zahlenwert rechts unten in der Figur auf vier signifikante Stellen angegeben wird. Rechts neben der Figur werden zu jedem Kreisbogen der Radius R, der Winkel $\alpha$ und die x- und y-Koordinate des Kreisbogenmittelpunkts Mx und My jeweils auf vier signifikante Stellen angegeben. Durch diese Angaben ist das Schneckenprofil eindeutig definiert. Das Schneckenprofil ist spiegelsymmetrisch zur x- und y-Achse, sodass sich das gesamte Schneckenprofil durch Spiegelung des gezeigten Viertels an der x- und y-Achse ergibt.

Schneckenprofile, bei denen ein Viertel des Schneckenprofils aus insgesamt n Kreisbögen besteht, werden nachfolgend als n-Kreis-Schneckenprofile bezeichnet.

Die Nummerierung der Kreisbögen eines n-Kreis-Schneckenprofils in der Figur 17a erfolgt derart, dass die ersten n/2 Kreisbögen in aufsteigender Reihenfolge 1 bis n/2 durchnummeriert werden und die letzten n/2 Kreisbögen in absteigender Reihenfolge (n/2)' bis 1' durchnummeriert werden. Der Kreisbogen n/2 und der Kreisbogen (n/2)' berühren jeweils die Gerade FP. Jeder Kreisbogen i des Schneckenprofils korrespondiert mit einem Kreisbogen i' des Schneckenprofils. Der Radius eines Kreisbogens i' berechnet sich aus der Differenz von Achsabstand minus des Radius des Kreisbogens i, also R_i'=A-R_i. Der Winkel eines Kreisbogens i' ist gleich dem Winkel eines Kreisbogens i, also $\alpha$_i'=$\alpha$_i. Daraus folgt, dass ein Kammbereich mit einem Kreisbogen j gleich einem Nutbereich mit einem Kreisbogen j' ist. Daraus folgt ferner, dass ein Nutbereich mit einem Kreisbogen j gleich einem Kammbereich mit einem Kreisbogen j' ist.

Die Figur 17a zeigt ein Viertel eines zweigängigen Erdmenger-Schneckenprofils gemäß Stand der Technik, welches aus 4 Kreisbögen aufgebaut ist. Charakteristisch für Erdmenger-Schneckenprofile ist, dass der Radius R_1=RA, der Radius R_2=0, der Radius R_2'=A=1 und der Radius R_1'=A-RA=RI ist. Die Winkel $\alpha$_1, $\alpha$_2, $\alpha$_2' und $\alpha$_1' hängen vom Schneckenaußenradius und vom Achsabstand ab. Der Winkel $\alpha$_1 ist gleich dem halben Kammwinkel eines zweigängigen Erdmenger-Schneckenprofils. Das Erdmenger-Schneckenprofil weist an der Stelle des Radius R_2 einen Knick auf. Die "Größe des Knicks" ist durch den Winkel $\alpha$_2 gegeben, d.h. der Übergang vom Kreisbogen 1 auf den Kreisbogen 2' erfolgt durch Drehung um den Winkel $\alpha$_2.

In der Figur 17a beträgt der dimensionslose Schneckenaußenradius RA = 0,6069. Der halbe Kammwinkel ist $\alpha$_1 =0, 1829.

Die Figur 17b zeigt ein Paar von Schneckenelementen, ausgebildet als Förderelemente, deren Schneckenprofil auf Figur 17a basiert. Der Achsabstand der beiden Förderelemente beträgt dimensionsbehaftet a=26,2 mm und dimensionslos A=a/a=1. Das Spiel zwischen den beiden Förderelementen beträgt dimensionsbehaftet s=0,2 mm und dimensionslos S=s/a=0,0076. Das Spiel zwischen den beiden Förderelementen und dem Gehäuse beträgt dimensionsbehaftet d=0,1 mm und dimensionslos D=d/a=0,0038. Die Steigung der Förderelemente beträgt dimensionsbehaftet t=28,0 mm und dimensionslos T=t/a=1,0687. Die Länge der Förderelemente beträgt dimensionsbehaftet 1=14,0 mm und dimensionslos L=1/a=0,5344, was einer Drehung der Schneckenprofile um einen Winkel von $\pi$ entspricht. Das Gehäuse wird durch dünne, durchgezogene Linien links und rechts der beiden Förderelemente dargestellt. Der Gehäusedurchmesser beträgt dimensionsbehaftet dg=31,8 mm und dimensionslos DG=dg/a=2*RA= 1,2137. Auf den Oberflächen der beiden Förderelemente ist ferner ein mögliches Rechengitter dargestellt, welches zur Berechnung der Strömung in Zwei- und Mehrwellenextrudern verwendet werden kann. Die Anzahl der Gitterelemente in Umfangsrichtung ist gleich 180 und in Axialrichtung gleich 90.

Die Figur 17c zeigt eine Draufsicht auf das Paar von Schneckenelementen nach Figur 17b. Das freie Volumen zwischen den Förderelementen und dem Gehäuse ist mit einem möglichen Rechengitter versehen, welches zur Berechnung der Strömung in Zwei- und Mehrwellenextrudern verwendet werden kann. Die Anzahl der Gitterelemente in Umfangsrichtung ist gleich 180 und in Radialrichtung gleich 10. Die Drehachsen der beiden Schneckenelemente sind durch kleine Kreise markiert.

Im Gegensatz zu den in den Figuren 17b und 17c gezeigten Rechengittern wird für die Berechnung der Druckdifferenz-Durchsatz-Charakteristik und der Leistungs-Durchsatz-Charakteristik ein Rechengitter verwendet, das 320 Gitterelemente in Umfangsrichtung, 160 Gitterelemente in Axialrichtung und 12 Gitterelemente in Radialrichtung aufweist. Die Achsenabschnitte der Druckdifferenz-Durchsatz-Charakteristik wurden wie folgt berechnet: A1=0,263 und A2=4250. Die Achsenabschnitte der Leistungs-Durchsatz-Charakteristik wurden wie folgt berechnet: B1=1,033, B2=4390. Der maximale Wirkungsgrad beim Druckaufbau ergibt sich zu 7,32%.

Für die Berechnung der maximalen Temperaturerhöhung wurde das Rechengitter nach den Figuren 17b und 17c verwendet. Das Geschwindigkeits- und Druckfeld wurde mit einem Nullvektor initialisiert. Der Druckgradient längs den Drehachsen wurde auf 0 gesetzt, so dass sich als Durchsatz der Eigendurchsatz A1 einstellt. Das Temperaturfeld wurde mit 300°C initialisiert. Sowohl die Gehäusewand als auch die Oberfläche der beiden Förderelemente wurde als adiabat angenommen. Die Entwicklung des Temperaturfeldes wurde über zwei Umdrehungen des Extruders verfolgt. Die Zeitschrittweite betrug 0,000925926 s. Die Drehzahl des Doppelschneckenextruders betrug 360 U/min.

Nach zwei Umdrehungen wurde die maximale Temperatur im Rechengebiet erreicht. Die maximale Temperatur liegt in praktisch gleicher Temperaturhöhe auf den Oberflächen der beiden Förderelemente und zwar in den Kammbereichen, die gerade das Gehäuse abreinigen. Die maximale Temperatur beträgt laut Berechnung etwa 400°C.

**Beispiel 2:**

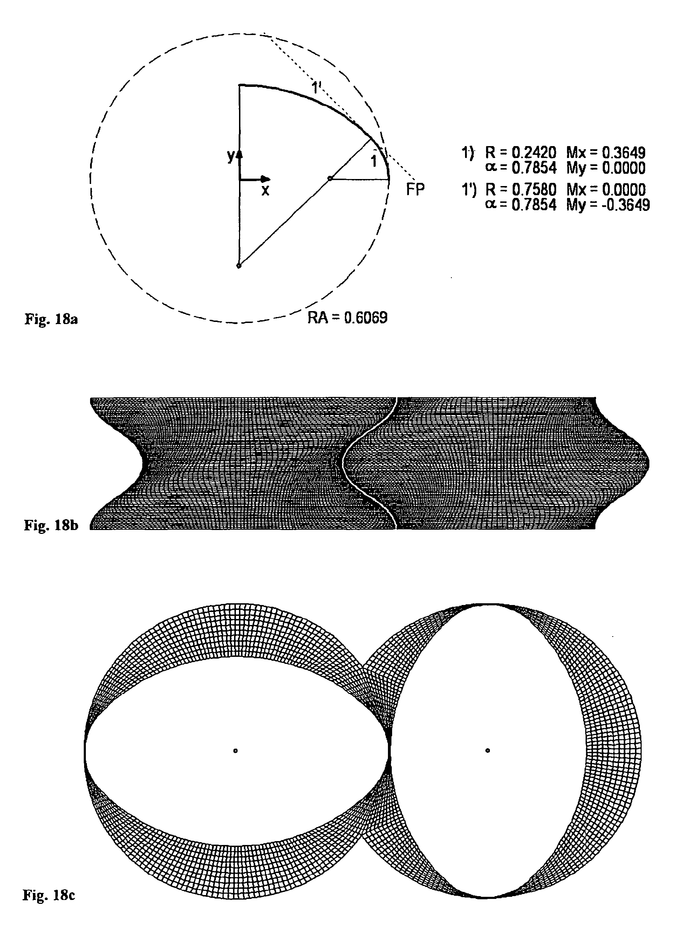

Die Geometrie eines erfindungsgemäß verwendeten Förderelements geht aus den Figuren 18a bis 18c hervor.

Die Figur 18a zeigt im Querschnitt ein Viertel eines Schneckenprofils eines erfindungsgemäß verwendeten Schneckenelements. Der Aufbau der Figur ist analog der Figur 17a und bereits dort ausführlich beschrieben worden. In der Figur 18a besteht das Viertel des Schneckenprofils aus 2 Kreisbögen. Charakteristisch für dieses Schneckenprofil ist ferner, dass das Schneckenprofil keinen Knick enthält und dass der Kammwinkel des Kammbereichs, also eines Bereich der auf dem Schneckenaußenradius liegt, gleich 0 ist. Der dimensionslose Schneckenaußenradius beträgt RA=0,6069.

Die Figur 18b zeigt ein Paar von Schneckenelementen, ausgebildet als Förderelemente, deren Schneckenprofil auf Figur 18a basiert. Der Achsabstand der beiden Förderelemente beträgt dimensionsbehaftet a=26,2 mm und dimensionslos A=a/a=1. Das Spiel zwischen den beiden Förderelementen beträgt dimensionsbehaftet s=0,2 mm und dimensionslos S=s/a=0,0076. Das Spiel zwischen den beiden Förderelementen und dem Gehäuse beträgt dimensionsbehaftet d=0,1 mm und dimensionslos D=d/a=0,0038. Die Steigung der Förderelemente beträgt dimensionsbehaftet t=28,0 mm und dimensionslos T=t/a=1,0687. Die Länge der Förderelemente beträgt dimensionsbehaftet l=14,0 mm und dimensionslos L=l/a=0,5344, was einer Drehung der Schneckenprofile um einen Winkel von π entspricht. Das Gehäuse wird durch dünne, durchgezogene Linien links und rechts der beiden Förderelemente dargestellt. Der Gehäusedurchmesser beträgt dimensionsbehaftet dg=31,8 mm und dimensionslos DG=dg/a=2*RA= 1,2137. Auf den Oberflächen der beiden Förderelemente ist ferner ein mögliches Rechengitter dargestellt, welches zur Berechnung der Strömung in Zwei- und Mehrwellenextrudern verwendet werden kann. Die Anzahl der Gitterelemente in Umfangsrichtung ist gleich 180 und in Axialrichtung gleich 90.

Die Figur 18c zeigt eine Draufsicht auf das Paar von Schneckenelementen nach Figur 18b. Das freie Volumen zwischen den Förderelementen und dem Gehäuse ist mit einem möglichen Rechengitter versehen, welches zur Berechnung der Strömung in Zwei- und Mehrwellenextrudern verwendet werden kann. Die Anzahl der Gitterelemente in Umfangsrichtung ist gleich 180 und in Radialrichtung gleich 10. Die Drehachsen der beiden Schneckenelemente sind durch kleine Kreise markiert.

Im Gegensatz zu den in den Figuren 18b und 18c gezeigten Rechengittern wird für die Berechnung der Druckdifferenz-Durchsatz-Charakteristik und der Leistungs-Durchsatz-Charakteristik ein Rechengitter verwendet, das 320 Gitterelemente in Umfangsrichtung, 160 Gitterelemente in Axialrichtung und 12 Gitterelemente in Radialrichtung aufweist. Die Achsenabschnitte der Druckdifferenz-Durchsatz-Charakteristik wurden wie folgt berechnet: A1=0,245 und A2=4530. Die Achsenabschnitte der Leistungs-Durchsatz-Charakteristik wurden wie folgt berechnet: B1=0,803, B2=3640. Der maximale Wirkungsgrad beim Druckaufbau ergibt sich zu 9,05%.

Überraschender Weise zeigt sich, dass das Druckaufbauvermögen des erfindungsgemäß verwendeten Förderelements trotz der minimierten, im dreidimensionalen nur linienförmigen Kammbereiche um etwa 6,6% größer ist als bei einem Förderelement mit zweigängigem Erdmenger-Schneckenprofil nach dem Stand der Technik aus Beispiel 1. Mit einem erfindungsgemäß verwendeten Förderelement lässt sich daher ein gewünschter oder erforderlicher Druckaufbau in einer kürzeren Druckaufbauzone bewerkstelligen, wodurch sich der Extruderaufbau entweder verkürzt oder sich bei konstanter Extruderlänge andere Verfahrenszonen wie beispielsweise eine Entgasungszone oder eine Mischzone verlängern und sich somit deren Wirkung auf die plastische Masse verbessert.

Zusätzlich zeigt sich, dass der Leistungsparameter B2 beim erfindungsgemäß verwendeten Förderelement etwa 17% niedriger ist als bei einem Förderelement mit zweigängigem Erdmenger-Schneckenprofil nach dem Stand der Technik aus Beispiel 1. Ein niedrigerer Energieeintrag verringert die Temperaturerhöhung und als Folge daraus auch die unerwünschte Polymerschädigung.

Für die Berechnung der maximalen Temperaturerhöhung wurde das Rechengitter nach den Figuren 17b und 17c verwendet. Das Geschwindigkeits- und Druckfeld wurde mit einem Nullvektor initialisiert. Der Druckgradient längs den Drehachsen wurde auf 0 gesetzt, so dass sich als Durchsatz der Eigendurchsatz A1 einstellt. Das Temperaturfeld wurde mit 300°C initialisiert. Sowohl die Gehäusewand als auch die Oberfläche der beiden Förderelemente wurde als adiabat angenommen. Die Entwicklung des Temperaturfeldes wurde über zwei Umdrehungen des Extruders verfolgt. Die Zeitschrittweite betrug 0,000925926 s. Die Drehzahl des Doppelschneckenextruders betrug 360 U/min.

Nach zwei Umdrehungen wurde die maximale Temperatur im Rechengebiet gesucht. Die maximale Temperatur liegt in praktisch gleicher Temperaturhöhe auf den Oberflächen der beiden Förderelemente und zwar auf einer Oberfläche knapp neben den minimierten Kammbereichen, die sich gerade im Zwickelbereich befinden, also in dem Bereich, in dem sich die beiden Gehäusebohrungen gegenseitig durchdringen. Die maximale Temperatur beträgt laut Berechnungen etwa 365°C. Die maximale Oberflächentemperatur auf den minimierten Kammbereichen, die gerade das Gehäuse abreinigen beträgt laut Berechnungen etwa 340°C.

Im Vergleich mit dem Förderelement nach dem Stand der Technik aus Beispiel 1 wird mit dem erfindungsgemäß verwendeten Förderelement aus Beispiel 2 eine um etwa 35°C niedrigere Spitzentemperatur erreicht. Bezogen auf die Kammbereiche ergibt sich sogar eine Temperaturdifferenz von etwa 60°C. Unter der Annahme, dass sich die Reaktionsgeschwindigkeitskonstante einer Polymerschädigungsreaktion pro 10°C Temperaturerhöhung verdoppelt, ergibt sich im Bereich der Schneckenkämme des Förderelements nach Beispiel 1 eine etwa 50-mal schnellere Polymerschädigung wie im Bereich der Schneckenkämme des Förderelements nach Beispiel 2.

## Patentansprüche

1. Verfahren zur Extrusion von plastischen Massen unter Verwendung von Schneckenelemente für mehrwellige Schneckenmaschinen mit paarweise gleichsinnigen und paarweise exakt abschabenden Schneckenwellen, mit zwei oder mehr Schneckengängen, wobei die Schneckenprofile im gesamten Querschnitt jeweils durch eine stetig differenzierbare Profilkurve darstellbar sind und zwischen Schneckenelementen und Gehäuse und/oder zwischen benachbarten Schneckertelementen Spiele im Bereich von 0,1 bis 0,001 bezogen auf den Durchmesser des Schneckenprofils vorhanden sind und sich das Schneckenprofil im gesamten Querschnitt aus vier oder mehr Kreisbögen zusammensetzt, wobei die Kreisbögen an ihren Anfangs- und Endpunkten tangential lneinander übergehen, **dadurch gekennzeichnet, dass**

- ein erzeugendes und ein erzeugtes Schneckenprofil einen Achsabstand a voneinander haben,
- die Anzahl der Kreisbögen des erzeugenden Schneckenprofils n ist,
- der Außenradius ra des erzeugenden Schneckenprofils größer als 0 (ra>0) und kleiner dem Achsabstand (ra<a) ist,
- der Kernradius ri des erzeugenden Schneckenprofils größer als 0 (ri>0) und kleiner oder gleich ra (ri≤ra) ist,
- alle Kreisbögen des erzeugenden Schneckenprofils tangential ineinander übergehen,
- die Kreisbögen ein geschlossenes Schneckenprofil bilden, d.h. die Summe der Winkel $\alpha_j$ aller Kreisbögen j gleich $2\pi\square$ ist, wobei $\pi$ die Kreiszahl ($\pi$=3,14159) ist,
- die Kreisbögen ein konvexes Schneckenprofil bilden,
- jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,
- mindestens einer der Kreisbögen des erzeugenden Schneckenprofils den Außenradius ra des erzeugenden Schneckenprofils in einem Punkt $P_A$ berührt,
- mindestens einer der Kreisbögen des erzeugenden Schneckenprofils den Kernradius ri des erzeugenden Schnerkenprofils in einem Punkt $P_1$ berührt,
- die Anzahl der Kreisbögen n' des erzeugten Schneckenprofils gleich der Anzahl der Kreisbögen n des erzeugenden Schneckenprofils ist,
- der Außenradius ra' des erzeugten Schneckenprofils gleich der Differenz Achsabstand minus Kernradius ri des erzeugenden Schneckenprofils ist (ra' = a-ri),
- der Kernradius ri' des erzeugten Schneckenprofils gleich der Differenz Achsabstand minus Außenradius ra des erzeugenden Schneckenprofils ist (ri' = a-ra),

- der Winkel $\alpha_{j'}$ des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,

- die Summe von Radius $r_j'$ des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,
- der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schnekkenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,
- ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

2. Verfahren gemäß Anspruch 1, **dadurch gekennzeichnet, dass** die Schneckenelemente punktsymmetrisch sind und sich die Profilkurve in einem Ausschnitt von $364°/(2 \cdot Z)$ aus mindestens zwei Kreisbögen zusammensetzt, wobei Z die Gangzahl der Schneckenelemente ist.

3. Verfahren gemäß einem der Ansprüche 1 oder 2, **dadurch gekennzeichnet, dass** sie achsensymmetrisch sind und sich die Profilkurve in einem Ausschnitt von $360°/(2 \cdot Z)$ aus mindestens zwei Kreisbögen zusammensetzt, wobei Z die Gangzahl der Schneckenelemente ist.

4. Verfahren gemäß Anspruch 3, **dadurch gekennzeichnet, dass** sich die Profilkurve in dem Ausschnitt aus zwei Kreisbögen zusammensetzt, wobei die Kreisbögen in einem Punkt $P_{FP}$ stetig differenzierbar ineinander übergehen, wobei der Punkt $P_{FP}$ auf einer Geraden FP liegt, deren Orthogonale im Punkt $P_{FP}$ durch die Mittelpunkte der beiden Kreisbögen verläuft.

5. Verfahren gemäß Anspruch 4, **dadurch gekennzeichnet, dass** die Schneckenelemente mit einem Drehpunkt D, einem Punkt $P_A$, der auf einem Kreis um den Drehpunkt mit dem Außenradius ra des Schneckenelements liegt, einem Punkt $P_1$, der auf einem Kreis um den Drehpunkt mit dem Innenradius ri des Schneckenelements liegt, einer Geraden $DP_A$, die durch die Punkte $P_A$ und D verläuft und einer Geraden $DP_1$, die durch die Punkte P, und D verläuft, das bei Verwendung eines kartesischen Koordinatensystems mit dem Punkt D im Ursprung und dem Punkt $P_A$ auf der x-Achse **dadurch gekennzeichnet ist, dass** die Orthogonale die Gerade $DP_A$ im Mittelpunkt eines der Kreisbögen schneidet und die Gerade $DP_I$ im Mittelpunkt des anderen Kreisbogens schneidet, und dass die Gerade FP einen Abstand entsprechend dem halben Achsabstand a vom Drehpunkt und eine Steigung im Bogenmaß von $-1/\tan(\pi/(2 \cdot Z))$ besitzt.

6. Verfahren gemäß einem der voranstehenden Ansprüche, **dadurch gekennzeichnet, dass** die Schneckenelemente als Mischelemente oder Förderelemente ausgebildet sind.

7. Verfahren gemäß einem der voranstehenden Ansprüche, **dadurch gekennzeichnet, dass** die Schneckenelemente als Knetelemente ausgebildet sind.

8. Verfahren gemäß einem der voranstehenden Ansprüche, **dadurch gekennzeichnet, dass** die Schneckenelemente in einer Entgasungs- oder Förderzone eingesetzt werden.

9. Verfahren gemäß einem der voranstehenden Ansprüche, **dadurch gekennzeichnet, dass** die plastischen Massen Thermoplaste oder Elastomere sind.

10. Verfahren gemäß Anspruch 9 **dadurch gekennzeichnet, dass** als Thermoplaste Polycarbonat, Polyamid, Polyester, insbesondere Polybutylenterephthalat und Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherkelon, Polyaryletherketon, Styrolpolymerisate, insbesondere Polystyrol,

Styrolcopolymere, insbesondere Styrolacrylnitrilcopolymer, Acrylnitrilbutadienstyrolblockcopolymere, Polyvinylchlorid oder ein Blend von mindestens zwei der genannten Thermoplaste eingesetzt wird.

11. Verfahren nach Anspruch 10, **dadurch gekennzeichnet, dass** als Thermoplast Polycarbonat oder ein Blend von Polycarbonat mit anderen Polymeren eingesetzt wird.

12. Verfahren gemäß Anspruch 11, **dadurch gekennzeichnet, dass** das Polycarbonat nach dem Grenz-flächenverfahren oder dem Schmelzeumesterungs-verfahren hergestellt wurde.

13. Verfahren gemäß Anspruch 9 **dadurch gekennzeichnet, dass** als Elastomer Styrol-Butadien-Kau-tschuk, Naturkautschuk, Butatiden-Kautschuk, Iso-pren-Kautschuk, Ethylen-Propylen-Dien-Kautschuk, Ethylen-Propylen-Kautschuk, Butadien-Acrylnitril-Kautschuk, hydrierter Nitrilkautschuk, Bu-tylkautschuk, Halobutylkautschuk, Chloropren-Kau-tschuk, Ethylen-Vinylacetat-Kautschuk, Polyu-rethan-Kautschuk, Thermoplastisches Polyurethan, Guttapercha, Arylatkautschuk, Fluorkautschuk, Sili-conkautschuk, Sulfidkautschuk, Chlorsulfonyl-Poly-äthylen-Kautschuk oder eine Kombination von mindestens zwei der genannten Elastomere eingesetzt wird.

14. Verfahren gemäß einem der voranstehenden Ansprüche, **dadurch gekennzeichnet, dass** dem Polymer Füll- oder Verstärkungsstoffe oder Polymeradditive oder organische oder anorganische Pigmente, oder Mischungen davon, zugesetzt werden.

**Claims**

1. Process for extruding plastic compositions using screw elements for multi-screw extruders with screws co-rotating in pairs and being fully self-wiping in pairs, with two or more screw flights, wherein the screw profiles may in each case be represented over the entire cross-section by a constantly differentiable profile curve and clearances in the range from 0.1 to 0.001 relative to the diameter of the screw profile are present between screw elements and barrel and/or between neighboring screw elements and the screw profile over the entire cross-section is composed of four or more circular arcs, wherein the circular arcs merge tangentially into one another at their start and end points, **characterized in that**

- a generating and a generated screw profile have a centerline distance a from one another,
- the number of the circular arcs of the generating screw profile is n,

- the outer radius ra of the generating screw profile is greater than 0 (ra>0) and less than the centerline distance (ra<a),
- the core radius ri of the generating screw profile is greater than 0 (ri>0) and less than or equal to ra (ri≤ra),
- all the circular arcs of the generating screw profile merge tangentially into one another,
- the circular arcs form a closed screw profile, i.e. the sum of the angles $\alpha_j$ of all the circular arcs j is equal to $2\pi$, wherein n is the circle constant (n ≈3.14159),
- the circular arcs form a convex screw profile,
- each of the circular arcs of the generating screw profile lies within or at the limits of a circular ring with the outer radius ra and the core radius ri, the center point of which lies on the point of rotation of the generating screw profile,
- at least one of the circular arcs of the generating screw profile touches the outer radius ra of the generating screw profile at a point $P_A$,
- at least one of the circular arcs of the generating screw profile touches the core radius ri of the generating screw profile at a point $P_I$,
- the number of circular arcs n' of the generated screw profile is equal to the number of circular arcs n of the generating screw profile,
- the outer radius ra' of the generated screw profile is equal to the difference of the centerline distance minus the core radius ri of the generating screw profile (ra' = a-ri),
- the core radius ri' of the generated screw profile is equal to the difference of the centerline distance minus the outer radius ra of the generating screw profile (ri' = a-ra),
- the angle $\alpha_j$' of the j'th circular arc of the generated screw profile is equal to the angle $\alpha_j$ of the jth circular arc of the generating screw profile, j and j' being integers which pass jointly through all the values in the range from 1 to the number of circular arcs n or n' respectively,
- the sum of radius $r_j$' of the j'th circular arc of the generated screw profile and radius $r_j$ of the jth circular arc of the generating screw profile is equal to the centerline distance a, j and j' being integers which pass jointly through all the values in the range from 1 to the number of circular arcs n or n' respectively,
- the center point of the j'th circular arc of the generated screw profile is at a distance from the center point of the jth circular arc of the generating screw profile which is equal to the centerline distance a, and the center point of the j'th circular arc of the generated screw profile is at a distance from the point of rotation of the generated screw profile which is equal to the distance of the center point of the jth circular arc of the generating screw profile from the point of rotation of the generating screw profile, and the connecting line between the center point of the j'th circular arc of the generated screw profile and the center point of the jth circular arc of the generating screw profile is a line parallel to a connecting line between the point of rotation of the generated screw profile and the point of rotation of the generating screw profile, j and j' being integers which pass jointly through all the values in the range from 1 to the number of circular arcs n or n' respectively,

- a starting point of the j'th circular arc of the generated screw profile lies in a direction relative to the center point of the j'th circular arc of the generated screw profile which is opposite to that direction which a starting point of the jth circular arc of the generating screw profile has relative to the center point of the jth circular arc of the generating screw profile, j and j' being integers which pass jointly through all the values in the range from 1 to the number of circular arcs n or n' respectively.

2. Process according to Claim 1, **characterized in that** the screw elements are point-symmetrical and, in one sector of 360°/(2·Z), the profile curve is composed of at least two circular arcs, wherein Z is the number of flights of the screw elements.

3. Process according to either of Claims 1 and 2, **characterized in that** they are axially symmetrical and, in one sector of 360°/(2·Z), the profile curve is composed of at least two circular arcs, wherein Z is the number of flights of the screw elements.

4. Process according to Claim 3, **characterized in that** the profile curve in the sector is composed of two circular arcs, wherein at a point $P_{FP}$ the circular arcs merge constantly differentiably into one another, wherein the point $P_{FP}$ lies on a straight line FP, the orthogonal line of which passes through the center points of the two circular arcs at the point $P_{FP}$.

5. Process according to Claim 4, **characterized in that** the screw elements with a point of rotation D, a point $P_A$, which lies on a circle about the point of rotation with the outer radius ra of the screw element, a point $P_I$, which lies on a circle about the point of rotation with the internal radius ri of the screw element, a straight line $DP_A$, which passes through the points $P_A$ and D, and a straight line $DP_I$, which passes through the points $P_I$ and D, which, when using a Cartesian system of coordinates with the point D at the origin and the point $P_A$ on the x axis, is **characterized in that** the orthogonal line intersects the straight line $DP_A$ at the center point of one of the circular arcs and the straight line DPI at the center point of the other circular arc, and **in that** the straight line FP is at a distance corresponding to half the centerline distance a from the point of rotation and has a gradient in radians of -1/tan(□/(2·Z)).

6. Process according to one of the preceding claims, **characterized in that** the screw elements are constructed as mixing elements or conveying elements.

7. Process according to one of the preceding claims, **characterized in that** the screw elements are constructed as kneading elements.

8. Process according to one of the preceding claims, **characterized in that** the screw elements are used in a degassing or conveying zone.

9. Process according to one of the preceding claims, **characterized in that** the plastic compositions are thermoplastics or elastomers.

10. Process according to Claim 9, **characterized in that** the thermoplastics used are polycarbonate, polyamide, polyester, in particular polybutylene terephthalate and polyethylene terephthalate, polyether, thermoplastic polyurethane, polyacetal, fluoropolymer, in particular polyvinylidene fluoride, polyether sulfones, polyolefin, in particular polyethylene and polypropylene, polyimide, polyacrylate, in particular poly (methyl)methacrylate, polyphenylene oxide, polyphenylene sulfide, polyether ketone, polyarylether ketone, styrene polymers, in particular polystyrene, styrene copolymers, in particular styrene-acrylonitrile copolymer, acrylonitrile-butadiene-styrene block copolymers, polyvinyl chloride or a blend of at least two of the stated thermoplastics.

11. Process according to Claim 10, **characterized in that** polycarbonate or a blend of polycarbonate with other polymers is used as the thermoplastic.

12. Process according to Claim 11, **characterized in that** the polycarbonate was produced by the phase boundary process or the melt transesterification process.

13. Process according to Claim 9, **characterized in that** the elastomer used is styrene-butadiene rubber, natural rubber, butadiene rubber, isoprene rubber, ethylene-propylene-diene rubber, ethylene-propylene rubber, butadiene-acrylonitrile rubber, hydrogenated nitrile rubber, butyl rubber, halobutyl rubber, chloroprene rubber, ethylene-vinyl acetate rubber, polyurethane rubber, thermoplastic polyurethane, gutta percha, acrylate rubber, fluororubber, silicone rubber, sulfide rubber, chlorosulfonyl-polyethylene rubber or a combination of at least two of the stated elastomers.

**14.** Process according to one of the preceding claims, **characterized in that** fillers or reinforcing materials or polymer additives or organic or inorganic pigments, or mixtures thereof, are added to the polymer.

**Revendications**

**1.** Procédé d'extrusion de pâtes plastiques par recours à des éléments hélicoïdaux pour machines à plusieurs arbres hélicoïdaux dotées d'arbres hélicoïdaux tournant par paires dans le même sens et se raclant deux à deux de manière exacte et présentant deux ou plusieurs pas hélicoïdaux,

la totalité de la section transversale des profils hélicoïdaux pouvant tous être représentés par une courbe profilée à différentielle croissante,

des jeux de l'ordre de 0,1 à 0,001 par rapport au diamètre du profil hélicoïdal étant prévus entre les éléments hélicoïdaux et le boîtier et/ou entre des éléments hélicoïdaux voisins,

la totalité de la section transversale du profil hélicoïdal étant constituée de l'assemblage d'au moins quatre arcs de cercle, les arcs de cercle se prolongeant tangentiellement l'un dans l'autre en leur point initial et leur point terminal,

le procédé étant **caractérisé en ce que**

- l'axe du profil hélicoïdal générateur et l'axe du profil hélicoïdal généré présentant un écart mutuel a,

- le nombre des arcs de cercle du profil hélicoïdal généré est n,

- le rayon extérieur ra du profil hélicoïdal généré est supérieur à 0 (ra > 0) et inférieur à l'écart entre les axes (ra < a),

- le rayon d'âme ri du profil hélicoïdal généré est supérieur à 0 (ri > 0) et inférieur ou égal à ra (ri $\leq$ ra),

- tous les arcs de cercle du profil hélicoïdal générateur se prolongent tangentiellement l'un dans l'autre,

- les arcs de cercle forment un profil hélicoïdal fermé, autrement dit, la somme des angles $\alpha_j$ de tous les arcs de cercle j est égale à $2\pi\square$, $\pi$ représentant 3,14159,

- les arcs de cercle forment un profil hélicoïdal convexe,

- chacun des arcs de cercle du profil hélicoïdal générateur est situé à l'intérieur ou sur les limites d'un anneau circulaire de rayon extérieur ra et de rayon d'âme ri dont le centre est situé sur le centre de rotation du profil hélicoïdal générateur,

- au moins l'un des arcs de cercle du profil hélicoïdal générateur touche le rayon extérieur ra du profil hélicoïdal généré en un point $P_A$,

- au moins l'un des arcs de cercle du profil hélicoïdal générateur touche le rayon d'âme ri du profil hélicoïdal générateur en un point $P_I$,

- le nombre des arcs de cercle n' du profil hélicoïdal généré est égal au nombre des arcs de cercle n du profil hélicoïdal générateur,

- le rayon extérieur ra' du profil hélicoïdal généré est égal à la différence entre l'écart entre les axes et le rayon d'âme ri du profil hélicoïdal générateur (ra' = a - ri),

- le rayon d'âme ri' du profil hélicoïdal généré est égal à la différence entre l'écart entre les axes et le rayon extérieur ra du profil hélicoïdal générateur (ri' = a - ra),

- l'angle $\alpha_j$' de l'arc de cercle j' du profil hélicoïdal généré est égal à l'angle $\alpha_j$ de l'arc de cercle j du profil hélicoïdal générateur, j et j' étant des nombres entiers qui traversent ensemble toutes les valeurs comprises entre 1 et le nombre n ou n' des arcs de cercle,

- la somme du rayon $r_j$' de l'arc de cercle j' du profil hélicoïdal généré et le rayon $r_j$ de l'arc de cercle j du profil hélicoïdal générateur est égale à l'écart a entre les axes, j et j' étant des nombres entiers qui traversent ensemble toutes les valeurs comprises entre 1 et le nombre n ou n' des arcs de cercle,

- le centre de l'arc de cercle j' du profil hélicoïdal généré présente par rapport au centre de l'arc de cercle j du profil hélicoïdal générateur une distance égale à la distance a entre les axes et le centre de l'arc de cercle j' du profil hélicoïdal généré présente par rapport au centre de rotation du profil hélicoïdal généré une distance égale à la distance entre le centre de l'arc de cercle j du profil hélicoïdal générateur par rapport au centre de rotation du profil hélicoïdal générateur et la ligne de liaison entre le centre de l'arc de cercle j' du profil hélicoïdal généré et le centre de l'arc de cercle j du profil hélicoïdal générateur est une parallèle à la ligne de liaison entre le centre de rotation du profil hélicoïdal généré et le centre de rotation du profil hélicoïdal générateur, j et j' étant des nombres entiers qui traversent ensemble toutes les valeurs comprises entre 1 et le nombre n ou n' des arcs de cercle et

- un point initial de l'arc de cercle j' du profil hélicoïdal généré est situé par rapport au centre de l'arc de cercle j' du profil hélicoïdal généré dans une direction opposée à la direction qui présente un point initial de l'arc de cercle j du profil hélicoïdal générateur par rapport au centre de l'arc de cercle j du profil hélicoïdal générateur, j et j' étant des nombres entiers qui traversent ensemble toutes les valeurs comprises entre 1 et le nombre n ou n' des arcs de cercle.

**2.** Procédé selon la revendication 1, **caractérisé en ce que** les éléments hélicoïdaux présentent une symétrie ponctuelle et **en ce que** dans une partie représentant 360°/(2.Z), les courbes profilés sont constituées de l'assemblage de deux arcs de cercle, Z étant le nombre de pas des éléments hélicoïdaux.

3. Procédé selon l'une des revendications 1 ou 2, **caractérisé en ce que** les éléments hélicoïdaux présentent une symétrie axiale et **en ce que** dans une fraction représentant 360°/(2.Z), la courbe profilée est constituée d'au moins deux arcs de cercle, Z représentant le nombre de pas des éléments hélicoïdaux.

4. Procédé selon la revendication 3, **caractérisé en ce que** dans la partie, la courbe profilée est constituée de deux arcs de cercle, les arcs de cercle se prolongeant l'un dans l'autre à différentielle croissante en un point $P_{FP}$, le point $P_{FP}$ étant situé sur une droite FP dont la perpendiculaire au point $P_{FP}$ passe par le centre des deux arcs de cercle.

5. Procédé selon la revendication 4, **caractérisé en ce que** les éléments hélicoïdaux un centre de rotation D, un point $P_A$ situé sur un cercle qui entoure le centre de rotation et dont le rayon extérieur est le rayon ra de l'élément hélicoïdal, un point $P_I$ situé sur un cercle qui entoure le centre de rotation à un rayon intérieur ri de l'élément hélicoïdal, une droite $DP_A$ qui passe par les points $P_A$ et D et une droite $DP_I$ qui passe par les points $P_I$ et D, qui, lorsque l'on utilise un système de coordonnées cartésiennes, le point D étant à l'origine et le point $P_A$ sur l'axe x, est **caractérisé en ce que**
la normale coupe la droite $DP_A$ au centre de l'un des arcs de cercle et la droite $DP_I$ coupe le centre de l'autre arc de cercle et **en ce que** la droite FP présente par rapport au centre de rotation une distance qui correspond à la moitié de la distance a entre les axes et une pente angulaire de $-1/\tan(\pi/(2.Z))$.

6. Procédé selon l'une des revendications précédentes, **caractérisé en ce que** les éléments hélicoïdaux sont configurés comme éléments de mélange ou éléments de transport.

7. Procédé selon l'une des revendications précédentes, **caractérisé en ce que** les éléments hélicoïdaux sont configurés comme éléments de pétrissage.

8. Procédé selon l'une des revendications précédentes, **caractérisé en ce que** les éléments hélicoïdaux sont utilisés dans une zone de dégazage ou une zone de transport.

9. Procédé selon l'une des revendications précédentes, **caractérisé en ce que** les pâtes plastiques sont des thermoplastiques ou des élastomères.

10. Procédé selon la revendication 9, **caractérisé en ce qu'**il utilise comme thermoplastiques les polycarbonates, les polyamides, les polyesters, notamment le poly(téréphtalate de butylène) et le poly(téréphtalate d'éthylène), les polyéthers, les polyuréthanes thermoplastiques, les polyacétals, les polymères fluorés, notamment le poly(fluorure de vinylidène), les polyéthersulfones, les polyoléfines, notamment le polyéthylène et le polypropylène, les polyimides, les polyacrylates, notamment le poly(métacrylate de méthyle), le poly(oxyde de phénylène), le poly(sulfure de phénylène), les polyéthercétones, les poly(aryléthercétones), les polymères de styrène, notamment le polystyrène, les copolymères de styrène, notamment les copolymères de styrène et d'acrylonitrile, les copolymères séquencés d'acryle, nitrile, butadiène et styrène, le poly(chlorure de vinyle) ou un mélange d'au moins deux de ces thermoplastiques.

11. Procédé selon la revendication 10, **caractérisé en ce qu'**il utilise comme thermoplastiques le polycarbonate ou un mélange de polycarbonate et d'autres polymères.

12. Procédé selon la revendication 11, **caractérisé en ce que** le polycarbonate a été préparé par un procédé à surface frontière ou par un procédé d'estérification à l'état fondu.

13. Procédé selon la revendication 9, **caractérisé en ce qu'**il utilise comme élastomères un caoutchouc de styrène et de butadiène, un caoutchouc naturel, un caoutchouc de butadiène, un caoutchouc d'isoprène, un caoutchouc d'éthylène, de propylène et de diène, un caoutchouc d'éthylène et de propylène, un caoutchouc de butadiène et d'acrylonitrile, un caoutchouc nitrile hydrogéné, un caoutchouc de butyle, un caoutchouc d'halogénobutyle, un caoutchouc au chloroprène, un caoutchouc à l'éthylène-acétate de vinyle, un caoutchouc de polyuréthane, un polyuréthane thermoplastique, le guttapercha, un caoutchouc à l'arylate, un caoutchouc fluoré, un caoutchouc au silicone, un caoutchouc au sulfure, un caoutchouc au chlorosulfonyle et polyéthylène ou une combinaison d'au moins deux de ces élastomères.

14. Procédé selon l'une des revendications précédentes, **caractérisé en ce que** des substances de charge ou de renfort, des additifs polymères, des pigments organiques ou minéraux ou des mélanges de ces substances sont ajoutés au polymère.

**Fig. 1**

1) R = 0.3069  Mx = 0.2731
   α = 0.7854  My = 0.0000

1') R = 0.6931  Mx = 0.0000
    α = 0.7854  My = -0.2731

RA = 0.5800

**Fig. 2a**

**Fig. 2b**

**Fig. 2c**

```
RG  = 0.6300        VPR = 0.0659
RV  = 0.5800        VPW= 0.7854
RA  = 0.5800        VLR = 0.0000
RF  = 0.5800        VLW= 0.0000
S   = 0.0000        VRR = 0.0000
D   = 0.0000        VRW= 0.0000
T   = 2.0000
```

**Fig. 3**

```
RG  = 0.5800        VPR = 0.0000
RV  = 0.5800        VPW= 0.0000
RA  = 0.5700        VLR = 0.0000
RF  = 0.5600        VLW= 0.0000
S   = 0.0200        VRR = 0.0000
D   = 0.0200        VRW= 0.0000
T   = 2.0000
```

**Fig. 4a**

```
RG  = 0.5800        VPR = 0.0000
RV  = 0.5800        VPW= 0.0000
RA  = 0.5600        VLR = 0.0000
RF  = 0.5500        VLW= 0.0000
S   = 0.0200        VRR = 0.0000
D   = 0.0300        VRW= 0.0000
T   = 2.0000
```

**Fig. 4b**

RG  = 0.5800
RV  = 0.5800
RA  = 0.5700
RF  = 0.5500
S   = 0.0400
D   = 0.0300
T   = 2.0000

VPR = 0.0000
VPW= 0.0000
VLR = 0.0000
VLW= 0.0000
VRR = 0.0000
VRW= 0.0000

**Fig. 4c**

RG  = 0.5800
RV  = 0.5800
RA  = 0.5800
RF  = 0.5500
S   = 0.0600
D   = 0.0300
T   = 2.0000

VPR = 0.0000
VPW= 0.0000
VLR = 0.0000
VLW= 0.0000
VRR = 0.0000
VRW= 0.0000

**Fig. 4d**

```
RG  = 0.5800
RV  = 0.5800
RA  = 0.5800
RF  = 0.5500
S   = 0.0600
D   = 0.0300
T   = 2.0000
```

```
VPR = 0.0000
VPW= 0.0000
VLR = 0.0200
VLW= 0.0000
VRR = 0.0200
VRW= 0.0000
```

Fig. 5a

```
RG  = 0.5800
RV  = 0.5800
RA  = 0.5800
RF  = 0.5500
S   = 0.0600
D   = 0.0300
T   = 2.0000
```

```
VPR = 0.0000
VPW= 0.0000
VLR = 0.0200
VLW= 0.5236
VRR = 0.0200
VRW= 0.5236
```

Fig. 5b

```
RG  = 0.5800
RV  = 0.5800
RA  = 0.5800
RF  = 0.5500
S   = 0.0600
D   = 0.0300
T   = 2.0000
```

```
VPR = 0.0000
VPW= 0.0000
VLR = 0.0200
VLW= 1.0472
VRR = 0.0200
VRW= 1.0472
```

Fig. 5c

RG  = 0.5800
RV  = 0.5800
RA  = 0.5800
RF  = 0.5500
S   = 0.0600
D   = 0.0300
T   = 2.0000

VPR = 0.0000
VPW= 0.0000
VLR = 0.0200
VLW= 1.5708
VRR = 0.0200
VRW= 1.5708

Fig. 5d

**Fig. 6a**

**Fig. 6b**

S2  S3

S1

7-1

A

**Fig. 7**

S2  S1

S3

y

x

1

FP

RA = 0.5433

1) R = 0.2199  Mx = 0.3234
   α = 0.5236  My = 0.0000

1') R = 0.7801  Mx = -0.1617
    α = 0.5236  My = -0.2801

**Fig. 8**

EP 2 291 271 B1

Fig. 9a

Fig. 9b

Fig. 9c

RG  = 0.6300
RV  = 0.5433
RA  = 0.5433
RF  = 0.5433
S   = 0.0000
D   = 0.0000
T   = 2.0000

VPR = 0.1378
VPW= 1.0472
VLR = 0.0000
VLW= 0.0000
VRR = 0.0000
VRW= 0.0000

**Fig. 9d**

Fig. 10a

Fig. 10b

Fig. 11

1) R = 0.2371  Mx = 0.2845
   α = 0.3927  My = 0.0000

1') R = 0.7629  Mx = -0.2012
    α = 0.3927  My = -0.2012

RA = 0.5217

Fig. 12a

Fig. 12b

RA = 0.5833

Fig. 13a

1) R = 0.0625   Mx = 0.5208
    $\alpha$ = 0.1745   My = 0.0000

2) R = 0.9375   Mx = -0.3409
    $\alpha$ = 0.2803   My = -0.1519

3) R = 0.0625   Mx = 0.4452
    $\alpha$ = 0.5822   My = 0.2325

4) R = 0.9375   Mx = 0.0000
    $\alpha$ = 0.5337   My = -0.5208

5) R = 0.9375   Mx = 0.0000
    $\alpha$ = 0.1745   My = -0.5208

6) R = 0.0625   Mx = -0.1519
    $\alpha$ = 0.2803   My = 0.3409

7) R = 0.9375   Mx = 0.2325
    $\alpha$ = 0.5822   My = -0.4452

8) R = 0.0625   Mx = -0.5208
    $\alpha$ = 0.5337   My = -0.0000

9) R = 0.0625   Mx = -0.5208
    $\alpha$ = 0.1745   My = -0.0000

10) R = 0.9375   Mx = 0.3409
    $\alpha$ = 0.2803   My = 0.1519

11) R = 0.0625   Mx = -0.4452
    $\alpha$ = 0.5822   My = -0.2325

12) R = 0.9375   Mx = -0.0000
    $\alpha$ = 0.5337   My = 0.5208

13) R = 0.9375   Mx = -0.0000
    $\alpha$ = 0.1745   My = 0.5208

14) R = 0.0625   Mx = 0.1519
    $\alpha$ = 0.2803   My = -0.3409

15) R = 0.9375   Mx = -0.2325
    $\alpha$ = 0.5822   My = 0.4451

16) R = 0.0625   Mx = 0.5208
    $\alpha$ = 0.5337   My = -0.0000

1') R = 0.9375   Mx = 1.5208
    $\alpha$ = 0.1745   My = -0.0000

2') R = 0.0625   Mx = 0.6591
    $\alpha$ = 0.2803   My = -0.1519

3') R = 0.9375   Mx = 1.4452
    $\alpha$ = 0.5822   My = 0.2325

4') R = 0.0625   Mx = 1.0000
    $\alpha$ = 0.5337   My = -0.5208

5') R = 0.0625   Mx = 1.0000
    $\alpha$ = 0.1745   My = -0.5208

6') R = 0.9375   Mx = 0.8481
    $\alpha$ = 0.2803   My = 0.3409

7') R = 0.0625   Mx = 1.2325
    $\alpha$ = 0.5822   My = -0.4452

8') R = 0.9375   Mx = 0.4792
    $\alpha$ = 0.5337   My = -0.0000

9') R = 0.9375   Mx = 0.4792
    $\alpha$ = 0.1745   My = -0.0000

10') R = 0.0625   Mx = 1.3409
    $\alpha$ = 0.2803   My = 0.1519

11') R = 0.9375   Mx = 0.5548
    $\alpha$ = 0.5822   My = -0.2325

12') R = 0.0625   Mx = 1.0000
    $\alpha$ = 0.5337   My = 0.5208

13') R = 0.0625   Mx = 1.0000
    $\alpha$ = 0.1745   My = 0.5208

14') R = 0.9375   Mx = 1.1519
    $\alpha$ = 0.2803   My = -0.3409

15') R = 0.0625   Mx = 0.7675
    $\alpha$ = 0.5822   My = 0.4451

16') R = 0.9375   Mx = 1.5208
    $\alpha$ = 0.5337   My = -0.0000

**Fig. 13b**

Fig. 14

Fig. 15

Fig. 16

Fig. 17a

1) R = 0.6069  Mx = 0.0000
   α = 0.1829  My = 0.0000

2) R = 0.0000  Mx = 0.5968
   α = 0.6025  My = 0.1104

2') R = 1.0000  Mx = -0.1104
    α = 0.6025  My = -0.5968

1') R = 0.3931  Mx = 0.0000
    α = 0.1829  My = 0.0000

RA = 0.6069

Fig. 17b

Fig. 17c

1) R = 0.2420  Mx = 0.3649
   α = 0.7854  My = 0.0000

1') R = 0.7580  Mx = 0.0000
    α = 0.7854  My = -0.3649

RA = 0.6069

Fig. 18a

Fig. 18b

Fig. 18c

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 862668
- EP O160124 A
- EP 1740638 A

**In der Beschreibung aufgeführte Nicht-Patentliteratur**

- **KOHLGRÜBER.** Der gleichläufige Doppelschneck-enextruder. Hanser Verlag, 2007
- *Polymer,* vol. 1, 192-212
- Doppelschneckenextruder. Hanser Verlag, 2007, 96 ff
- Thermal Degradation Studies of Polycarbonate. **J. ROBERTSON.** Virginia Polytechnic Institute and State University, Blacksburg. 2001
- **K. CHRISSAFIS.** Kinetics of Thermal Degradation of Polymers. *Journal of Thermal Analysis and Calorimetry,* 2009, vol. 95 (1), 273-283
- **CHANG DAE HAN.** Multiphase Flow in Polymer Processing. Academic Press, 1981
- Schädigungsmechanismen bei Polymeren. **HEPPERLE,J.** Polymeraufbereitung. VDI-Verlag, 2002
- **ZWEIFEL, H.** Stabilization of Polymeric Materials. Springer, 1997
- Antioxidants. **SCHWARZENBACH, K. et al.** Plastics Additives Hand-book. Hanser, 2001
- **CHENG, H.N. ; SCHILLING, F.C. ; BOVEY, F.A.** C Nuclear Magnetic Resonance Observation of the Oxidation of Polyethylene. *Macromolecules,* 1976, vol. 9, 363-365
- Comparative Analysis of Various Polyethylene Production Technologies. *Chem. And Petroleum Eng.,* 2008, vol. 44 (7-8
- Polymeraufbereitung 2002, VDI-K. VDI-Verlag, 2002, 159